# EUROPÄISCHE PATENTANMELDUNG

(11) **EP 4 357 277 A2**
(43) Veröffentlichungstag der Anmeldung: **24.04.2024**
(21) Anmeldenummer: 24151122.9
(22) Anmeldetag: 26.01.2017
(51) Int. Cl.: B65G 69/16

(54) **VORRICHTUNG ZUM BEFÜLLEN EINES ROHRES MIT PARTIKELFÖRMIGEM FÜLLGUT**

(30) Priorität: 28.01.2016 EP 16153078
(62) Teilanmeldung aus: 17701354.7
(71) Anmelder: T.I.M.E. Service Catalyst Handling GmbH, 85077 Manching (DE)
(72) Erfinder: COTA, Aldo, verstorben (DE)
(74) Vertreter: Reitstötter Kinzebach

(57) **Zusammenfassung**

Die vorliegende Erfindung betrifft eine Vorrichtung zum schonenden und gleichmäßigen Befüllen eines Rohres, wie insbesondere eines Rohrreaktors mit partikelförmigem Füllgut, wie insbesondere Katalysatorpartikeln; wobei die Vorrichtung speziell ausgestaltete Falldämpferelemente umfasst und außerdem Mittel umfasst, die den Verschleiß der Falldämpferelemente verringern; sowie Verfahren zum Befüllen eines Rohres unter Verwendung dieser Gegenstände.

## Beschreibung

Die vorliegende Erfindung betrifft eine Vorrichtung zum schonenden und gleichmäßigen Befüllen eines Rohres, wie insbesondere eines Rohrreaktors mit partikelförmigem Füllgut, wie insbesondere Katalysatorpartikeln; wobei die Vorrichtung speziell ausgestaltete Falldämpferelemente umfasst und außerdem Mittel umfasst, die den Verschleiß der Falldämpferelemente verringern; sowie Verfahren zum Befüllen eines Rohres unter Verwendung dieser Gegenstände.

### Hintergrund der Erfindung

Für die Durchführung chemischer Reaktionen in mit Katalysatorpartikeln befüllten Rohrreaktoren ist die Güte der Katalysatorfüllung von großer Bedeutung. Ein homogenes Katalysatorbett gewährleistet eine gleichmäßige Temperaturverteilung im Reaktor. Beim Einfüllen der mechanisch häufig sehr empfindlichen Katalysatorpartikel können aufgrund zu großer mechanischen Krafteinwirkung Partikel zerbrechen oder es kann Katalysatormasse abgerieben werden. Dadurch wird die Katalysatorfüllung verdichtet und führt bei Betrieb des Reaktors zu unerwünschten Druckverlusten. Bei ungleichmäßiger Befüllung besteht außerdem die Gefahr der Ausbildung sogenannter "Hot Spots", d.h. Zonen unerwünscht erhöhter Temperatur im Reaktor, welche die Steuerung des Reaktionsverlaufs beeinträchtigen. Bei der Befüllung von Rohrreaktoren mit Katalysatorpartikeln ist daher besonderes Augenmerk auf die Homogenität der erhaltenen Schüttung zu richten. Dies versucht man durch möglichst schonende Befüllung des Rohres mit den Katalysatorpartikeln zu erreichen.

Aus der EP-A-0 548 999 ist ein Verfahren zum Befüllen von vertikalen Rohren mit partikelförmigem Material bekannt, bei dem man in das Rohr eine Leine einführt, welche quer zur Leine angeordnete, radiale Dämpfungsmittel in Form von biegsamen Bürsten trägt, deren radiale Ausdehnung geringer ist als der Halbmesser des Rohres. Diese Bürsten geben stufenweise nach, wenn die Partikel darauf fallen. Die Leine wird während des Befüllens nach oben aus dem Rohr gezogen.

Diese aus dem Stand der Technik bekannte Vorrichtung weist gravierende Nachteile in der Praxis auf. Insbesondere verursacht die radiale Anordnung der geraden, kurzen Borsten des Dämpfungsmittels häufig unerwünschte Störungen während des Füllvorgangs. Das Dämpfungsmittel ist nämlich insbesondere im zentralen Bereich, d.h. nahe an der Leine, aufgrund der hohen Borstendichte für die Katalysatorpartikel nicht durchlässig, so dass insbesondere bei zu hoher Füllgeschwindigkeit weniger Partikel durch das Dämpferelement nach unter austreten als von oben nachgefüllt wird. Dadurch kommt es häufig zu einem Verstopfen des Rohrs, und als Folge davon zu einem Reißen des Trägerseils. Um diese Störung zu beseitigen, muss der Füllvorgang unterbrochen und bereits eingefüllter Katalysator wieder abgesaugt werden, wodurch der gesamte Vorgang unnötig verzögert und die Stillstandszeit der Anlage unnötig verlängert wird. Wenn der Befüllungsvorgang nicht kontinuierlich durchgeführt wird, kann dies außerdem die Homogenität der Partikel-Schüttung beeinträchtigen.

Eine weitere Vorrichtung zum Befüllen von Rohren mit Katalysatorpartikeln wird in der US 6,467,513 beschrieben. Diese umfasst eine mit bürstenförmigen Dämpferelementen versehene Leine, welche sich in einem biegsamen Füllrohr befindet. Die Leine wird zusammen mit dem Füllrohr in den zu befüllenden Reaktor eingeführt und zusammen mit dem Füllrohr aus dem Reaktor während des Füllvorgangs wieder herausgezogen. Insgesamt ist bei einer derartigen Vorrichtung die Handhabung des Füllrohrs während der Befüllung besonders umständlich, und außerdem wird dadurch der Füllvorgang unnötig verlangsamt. Es werden in diesem Dokument außerdem verschiedene Dämpferelemente für diese Vorrichtung beschrieben, insbesondere Bürsten mit radial abweisenden Armen; Bürsten, bei denen zwischen zwei benachbarten Armen zusätzlich metallische Gitterelemente angebracht sind und die somit recht aufwändig konstruiert sind; sowie Vorrichtungen mit blattförmigen, radial angeordneten Armen. Wie die genannten Gitterelemente tatsächlich beschaffen sein sollen und wie diese insbesondere an zwei benachbarten Armen befestigt sein sollen, ohne die Funktion des Dämpferelements zu beeinträchtigen, wird allerdings nicht beschrieben. Die Maschenweite dieser regelmäßig aufgebauten Gitterelemente soll an die Partikelgröße der jeweils verwendeten Katalysatoren anpassbar sein. Jedenfalls ist aber bei derartigen zusätzlichen Gitterelementen deren Herstellung kompliziert und teuer und außerdem wird dadurch die Elastizität derartiger Dämpferelemente insgesamt in unerwünschter Weise herabgesetzt.

Aus der WO 2004/096428 ist eine weitere Vorrichtung zum Befüllen von Rohren mit Katalysatorpartikeln bekannt, wobei an einer zentralen Leine gleichmäßig beabstandete, klammerartig ausgebildete, longitudinale und im wesentlichen starre Falldämpfer asymmetrisch angeklemmt sind und radial und im wesentlichen horizontal nach außen weisen. Die Klammern sind entlang der zentralen Leine axial so angeordnet, dass eine umlaufende Bedeckung des Rohrquerschnitts gewährleistet sein soll. Die einzelnen Falldämpfer bilden keine netzartige Struktur aus. Ohne genauere Angaben zu machen, wird darin außerdem die Möglichkeit erwähnt, am unteren Ende der Leine einen nicht näher beschriebenen Sensor anzubringen, der ein optisches oder akustisches Signal an das obere Ende der Leine übermittelt, sobald das untere Ende in Kontakt mit der Katalysator-Füllung gelangt. Konstruktive Details hierzu fehlen aber völlig. Eine permanente optische Überwachung wird zudem nicht vorgeschlagen. Nachteilig ist hierbei, dass die Vorrichtung beim Befüllen in heftige Drehbewegungen versetzt werden kann, wodurch eine Bedeckung des Rohrquerschnitts mit Dämpferelementen nicht mehr sicher gewährleistet und somit die Falldämpfung nicht optimal ist. Eine homogene Ausbildung des aufgeschütteten Katalysatorbetts ist damit nicht zu erreichen, bei höheren Füllgeschwindigkeit besteht dazu die Gefahr eines Zerbrechens der Katalysatorpartikel und damit die Ausbildung von "Hot-Spots" während des Anlagenbetriebs.

Die EP-A-1 749 568 beschreibt eine Vorrichtung zum Befüllen eines Rohres mit partikelförmigem Füllgut, umfassend wenigstens ein an einem Träger befestigtes, und zusammen mit dem Träger in das zu befüllende Rohr einführbares Falldämpferelement, wobei das Falldämpferelement ein für die Füllgutpartikel durchlässiges Netzgebilde trägt, wobei das Netzgebilde von einer Vielzahl elastischer Netzelemente gebildet wird. Die einzelnen Netzelemente, die z. B. aus dünnen Stahldrähten ausgebildet sein können, sind am zentralen Korpus des Falldämpferelements starr oder über Federgelenke befestigt. Daher ist das Netzgebilde während der Befüllung im Zentralbereich starken mechanischen Belastungen ausgesetzt. Dies gilt insbesondere dann, wenn die Füllgutpartikel Außenkanten aufweisen. Die starke mechanische Belastung beim Aufprall solcher Partikel auf einzelne Netzelemente führt dabei zu verstärkter Materialermüdung und zum Brechen von einzelnen Netzelementen. Eine vorzeitige Erneuerung einzelner ganzer Falldämpferelemente und möglicherweise sogar eine längere Unterbrechung des Füllvorgangs können deshalb notwendig werden. Die mit diesem Vorrichtungstyp an sich verbundenen signifikanten Vorteile hinsichtlich gleichmäßiger und partikelschonender Befüllung werden dadurch beeinträchtigt.

Aufgabe der vorliegenden Erfindung ist daher die Bereitstellung einer verbesserten Befüllvorrichtung für gerade, longitudinale Rohre, wie Rohrreaktoren, insbesondere solchen mit Durchmessern von mehr als 50 mm, die noch weniger störanfällig ist und ein noch rascheres, schonendes und gleichmäßiges Befüllen des Rohres mit Füllgut ermöglicht.

### Kurzfassung der Erfindung

Obige Aufgabe konnte insbesondere durch Bereitstellung einer verbesserten Füllvorrichtung gelöst werden, die einerseits die aus der EP-A-1 749 568 bekannten ein Netzgebilde umfassenden Falldämpferelemente aufweist, die aber zusätzlich speziell ausgestaltete Füllgutabweiser oberhalb eines jeden Falldämpferelements aufweist.

Diese Füllgutabweiser sind so ausgebildet, dass sie den mechanisch am stärksten belasteten Zentralbereich eines Falldämpferelementes bzw. den Zentralbereich des entsprechenden Netzgebildes, und insbesondere den inneren Abschnitt der einzelnen Netzelemente davon, über welchen diese am Korpus des Falldämpferelements befestigt sind, vor dem direkten Aufprall von Füllgutpartikeln schützen, andererseits aber die Befüllgeschwindigkeit nicht wesentlich verlangsamen oder sogar ein Verstopfen des Rohrreaktors mit Füllgut während des Befüllvorgangs verursachen.

Die Fallgeschwindigkeit des Füllguts wird erfindungsgemäß einerseits wirksam verringert und andererseits kommt es auch bei der erfindungsgemäßen Ausgestaltung der Vorrichtung auch bei hoher Füllgeschwindigkeit nicht zum Verstopfen des zu befüllenden Rohrs. Überraschenderweise wurde festgestellt, dass bei Verwendung eines lockeren, flexiblen und irregulären Netzgebildes aus einem oder mehreren flexiblen, gekrümmten Netzelementen in Kombination mit derartigen Füllgutabweisern ein störungsfreieres und schonendes Befüllen eines Rohres mit partikelförmigem Füllgut möglich wird. Erfindungsgemäß wurde nämlich insbesondere beobachtet, dass die Füllgutpartikel durch die erfindungsgemäße Ausbildung des Falldämpferelements in Kombination mit einem darüber angeordneten zentralen Füllgutabweiser während des Füllvorgangs rasch über den Rohrquerschnitt verteilt, bzw. zerstreut werden, durch diese relativ ungeordnete Bewegung einem Verstopfen effektiv vorgebeugt wird und gleichzeitig die Netzelemente, bzw. Falldämpferelemente eine deutlich verbesserte Lebensdauer aufweisen.

### Figurenbeschreibung

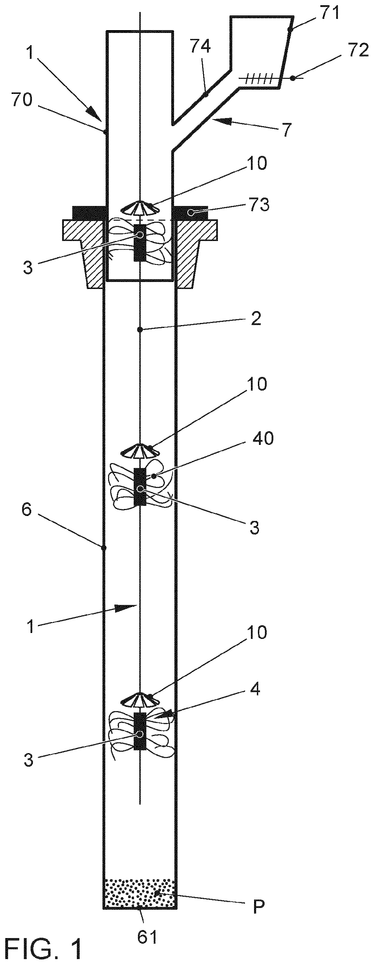

Figur 1 zeigt eine erfindungsgemäße Füllvorrichtung (1) während der Befüllung eines vertikalen Rohres (6) mit Füllgutpartikeln (P). Insbesondere umfasst die longitudinal im Rohr (6) platzierte Vorrichtung (1) drei erfindungsgemäße Falldämpferelemente (3), welche an einem Träger (2) befestigt sind. Jedes Falldämpferelement (3) trägt eine Vielzahl von irregulär angeordneten, gekrümmten faserförmigen, z.B. aus einzelnen Stahldraht-Stücken gefertigten, Netzelementen (40). Über einem jeden Falldämpferelement (3) ist ein hut- oder schirmförmiger Füllgutabweiser (10), z.B. aus dünnen Stahlblech gefertigt, am Träger (2) befestigt und so ausgebildet, dass er den Zentralbereich des von den Netzelementen (40) ausgebildeten Netzes (4) vor direktem Aufprall der von oben über die Einfüllhilfe (7) einzufüllenden Füllgutpartikeln (P) schützt.

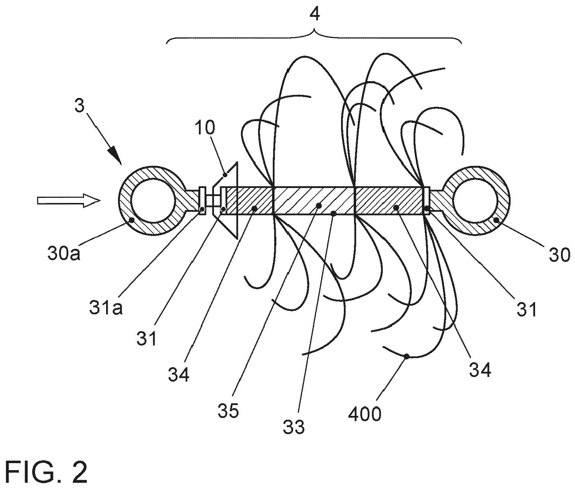

Figur 2 zeigt die Seitenansicht einer Ausgestaltung eines erfindungsgemäßen Falldämpferelements (3). Das Falldämpferelement (3) umfasst zwei Ringschrauben (30, 30a) zur Befestigung des Falldämpferelements (3) am Träger (2) sowie eine Vielzahl von radial gekrümmten, z.B. aus einzelnen Stahldraht-Stücken gefertigten, Fasern (400). Über die Anschläge (31) der beiden Ringschrauben werden die einzelnen Elemente (34, 35) zusammengepresst. Die obere (in der Figur linke) Ringschraube (30a) trägt in dem von den beiden Anschlägen (31,31a) ausgebildeten Zwischenraum einen erfindungsgemäßen schirmförmigen Füllgutabweiser (10) (hier schematisch gezeigt). Die Befüllrichtung ist mittels eines Pfeils angedeutet.

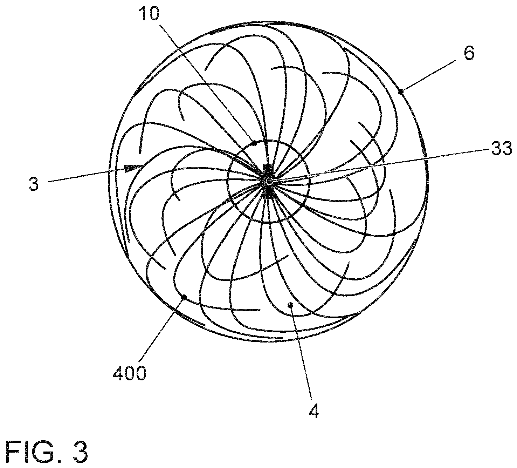

Figur 3 zeigt in der Draufsicht ein erfindungsgemäßes Falldämpferelement (3) entsprechend Figur 2 mit radial angeordneten, in gleicher Richtung aber unterschiedlich stark gekrümmten, z.B. aus einzelnen Stahldraht-Stücken gefertigten, Fasern (400) unterschiedlicher Länge, welche ein asymmetrisches offenes Netzgebilde (4) ausbilden. Die im Wesentlichen mittige Anordnung des in der Draufsicht kreisförmigen Füllgutabweisers (10) ist schematisch angedeutet.

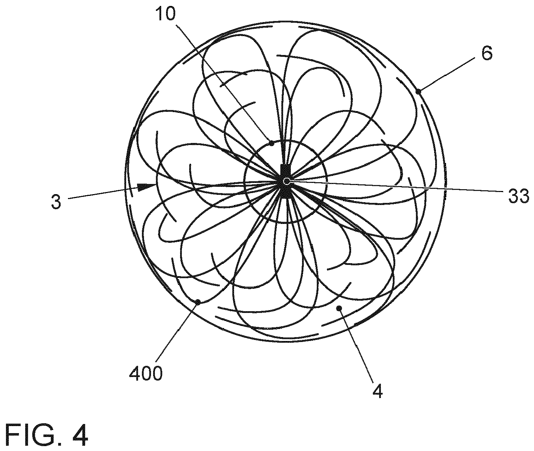

Figur 4 zeigt in der Draufsicht eine alternative Ausgestaltung eines Falldämpferelements (3) aus Figur 2 mit radial angeordneten, in verschiedenen Richtungen gekrümmten, z.B. aus einzelnen Stahldraht-Stücken gefertigten, Fasern (400), welche ein asymmetrisches, offenes Netzgebilde (4) ausbilden. Die im Wesentlichen mittige Anordnung des in der Draufsicht kreisförmigen Füllgutabweisers (10) ist schematisch angedeutet.

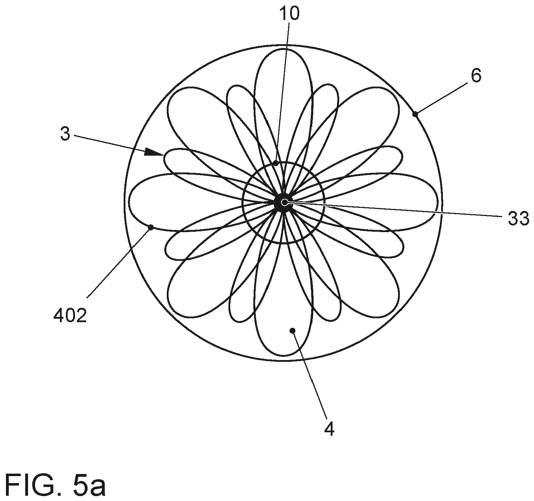

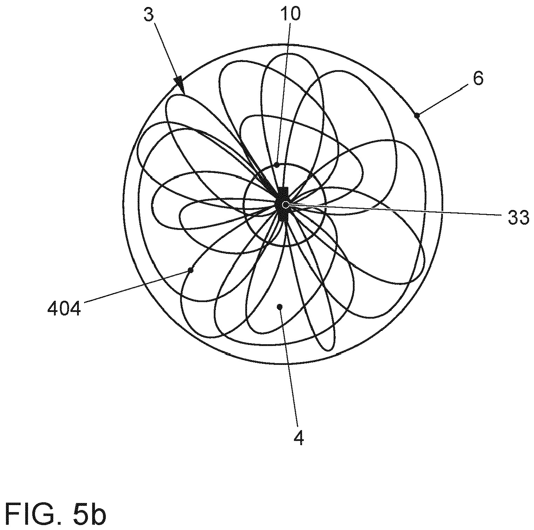

Figur 5a zeigt in der Draufsicht eine weitere alternative Ausgestaltung eines Falldämpferelements (3) aus Figur 2 mit radial angeordneten , z.B. aus einzelnen Stahldraht-Stücken gefertigten, Schlaufen (402) unterschiedlicher Länge, welche ein asymmetrisches, geschlossenes Netzgebilde (4) ausbilden. Die im Wesentlichen mittige Anordnung des in der Draufsicht kreisförmigen Füllgutabweisers (10) ist schematisch angedeutet. Figur 5b zeigt in der Draufsicht eine weitere alternative Ausgestaltung eines Falldämpferelements (3) aus Figur 5a welches von einem durchgehenden elastischen, z.B. aus Stahldraht gefertigten, Faden (404) gebildet wird, der schlaufenartige Segmente ausbildet, indem er abschnittsweise am Korpus (33) befestigt ist. Auch hier wird ein asymmetrisches, geschlossenes Netzgebilde (4) ausgebildet. Die im Wesentlichen mittige Anordnung des in der Draufsicht kreisförmigen Füllgutabweisers (10) ist schematisch angedeutet.

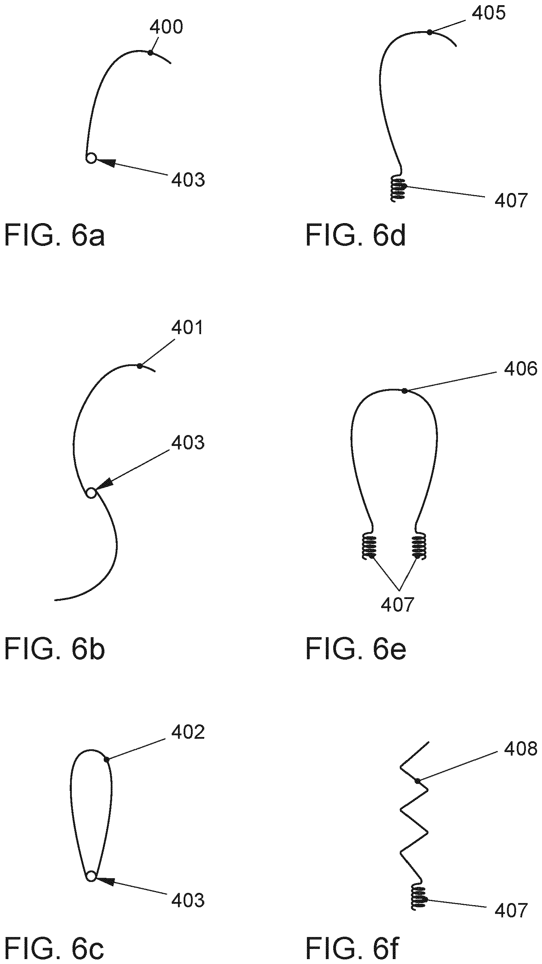

Figur 6 zeigt verschiedene Ausgestaltungen erfindungsgemäßer Netzelemente (40), und zwar a) als radial gekrümmte Einzelfaser (400), b) als radial gekrümmte S-förmige Doppelfasern (401); c) als Schlaufe (402), wobei diese Netzelemente über eine endständige Öse (403) am Falldämpferelement befestigbar sind; die Figuren 6 d), e) und f) zeigen Netzelemente, welche über Federgelenke (407) am Falldämpferelement befestigbar sind, und zwar d) eine Faser (405), e) eine Schlaufe (406) mit zwei endständigen Federgelenken (407) und f) eine mehrfach gekrümmte Zackenfaser (408).

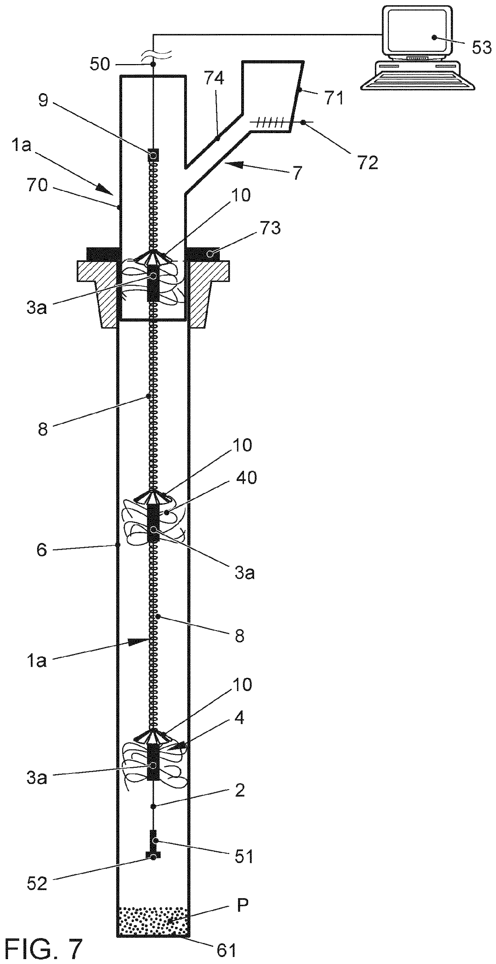

Figur 7 zeigt in schematischer Darstellung eine weitere Ausgestaltung einer in ein Rohr (6) eingesetzte Füllvorrichtung (1a), umfassend einen longitudinal im Rohr (6) platzierten als Träger dienenden, flexiblen Lichtleiter (50), außerhalb des Rohres (6) verbunden mit einem Monitor (53) und am gegenüberliegenden im Rohr (6) befindlichen Ende ausgestattet mit einer Lichtquelle (52) und einer Linse (51). Die Vorrichtung umfasst drei Falldämpferelemente (3a) welche durch Spiralfedern (8) miteinander federnd verbunden sind. Über einem jeden Falldämpferelement (3a) ist ein hut- oder schirmförmiger z.B. aus Stahlblech gefertigter Füllgutabweiser (10) so ausgebildet, dass er den Zentralbereich des von den Netzelementen (40) ausgebildeten Netzes (4) vor direktem Aufprall der von oben über die Einfüllhilfe (7) einzufüllenden Füllgutpartikeln (P) schützt. Eine (hier nicht dargestellte) Abwandlung umfasst eine derartige Füllvorrichtung, bei der die Spiralfedern (8) fehlen und die Falldämpferelemente (3a) und Füllgutabweiser (10) am Lichtleiter (50) lösbar befestigt sind.

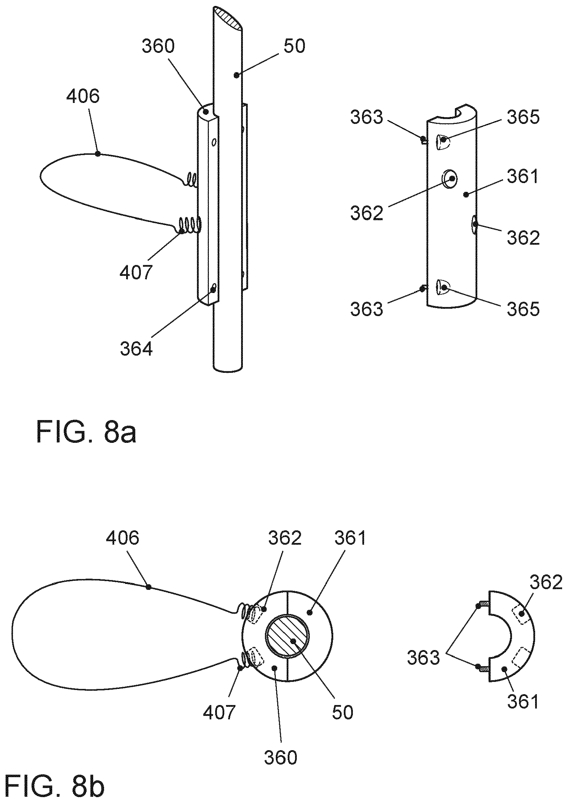

Figur 8 zeigt eine weitere Ausgestaltung erfindungsgemäßer Falldämpferelemente. Die Netzelemente, hier Schlaufen (406) mit Federgelenken (407), werden von einem zweiteiligen hülsenförmigen metallischer Korpus, bestehend aus zwei miteinander verschraubbaren Korpushälften (360,361) getragen. Die Federgelenke sind dabei in seitliche, radial über den Umfang der Korpushälften verteilte Vertiefungen oder Ausnehmungen (362) eingesetzt. Der Innendurchmesser des hülsenförmigen Korpus ist an den Durchmesser des Trägers, hier des Lichtleiters (50), angepasst, so dass bei Verschrauben der beiden Korpushälften, der Korpus am Lichtleiter (50) formschlüssig fixiert wird. Figur 8a) zeigt die perspektivische Ansicht der Anordnung vor dem Verschrauben der beiden Korpushälften (360, 361). Figur 8b) zeigt einen Querschnitt durch den am Lichtleiter (50) verschraubten Korpus. Ein erfindungsgemäßer Füllgutabweiser (10) (hier nicht gezeigt) kann nach dieser Ausführungsform am Lichtleiter (50) ebenfalls oberhalb eines jeden Falldämpferelements angeordnet werden.

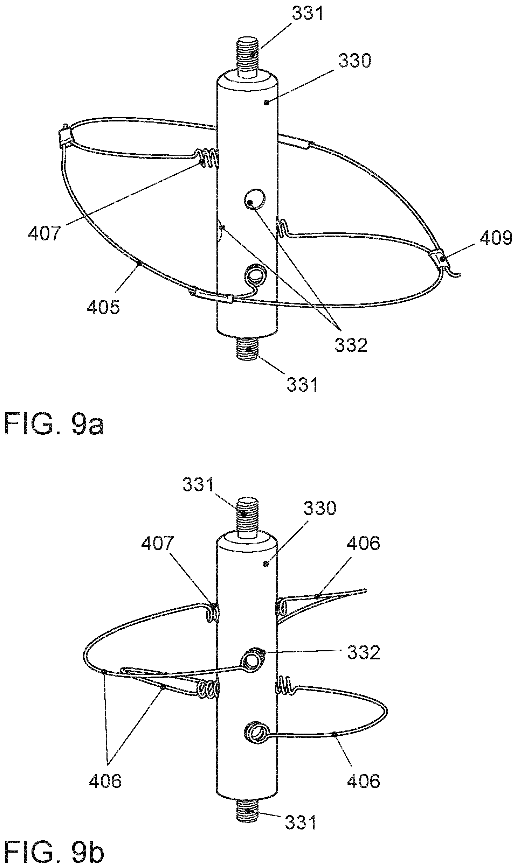

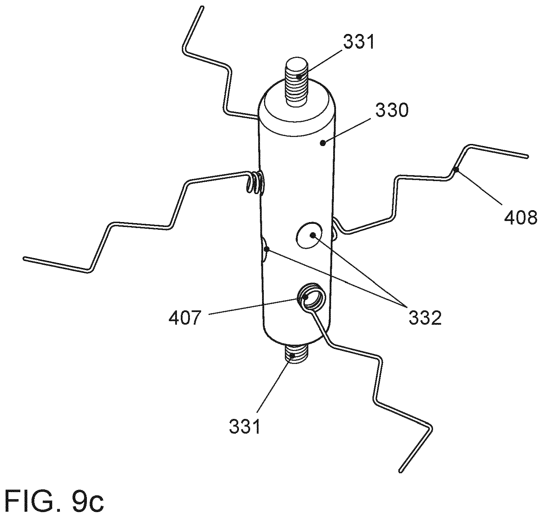

Figur 9 zeigt weitere Ausgestaltungen erfindungsgemäßer Falldämpferelemente. Ein einstückiger, metallischer Korpus (330) ist jeweils an seinem oberen und unteren Ende mit einem Schraubgewinde (331) versehen. Über dieses Schraubgewinde (331) ist er mit dem (nicht dargestellten) Träger (2) verbindbar. Über den gesamten Umfang des mittleren Abschnittes des Korpus (330) sind mehrere Vertiefungen oder Ausnehmungen (332) vorgesehen, welche so ausgebildet sind, dass darin die, z.B. aus einzelnen Stahldraht-Stücken gefertigten, Netzelemente fixierbar sind, die zusammen ein dreidimensionales Netz ausbilden. Insbesondere sind hier Vertiefungen (332) vorgesehen, welche die Federgelenkte (407) aufnehmen können. Die Federgelenke (332) ragen noch soweit aus den Vertiefungen (332), dass eine verbesserte Federwirkung gewährleistet ist. Figur 9a) zeigt ein aus vier radial über den Umfang des Korpus (330) verteilte Fasern (405) die zusammen ein dreidimensionales Netz des dargestellten Falldämpferelements ausbilden, wobei jedes distale Faserende mit Hilfe einer Verbindung (409) mit einer benachbarten Faser (405) in deren Mittelabschnitt verbunden ist. Falls erforderlich oder gewünscht können in weitere Vertiefungen (332) zusätzliche Fasern eingesetzt werden, um das dreidimensionale Netzgebilde engmaschiger auszubilden. Figur 9b) zeigt ein aus vier Schlaufen (406) gebildetes dreidimensionales Netz des dargestellten Falldämpferelements, wobei beide Enden jeder der Schlaufen als Federgelenke (407) ausgebildet sind und in einer von insgesamt acht radial und longitudinal am Korpus (330) verteilten Vertiefungen (332) eingesetzt sind. Falls erforderlich oder gewünscht können weitere Vertiefungen (332) für zusätzliche Schlaufen ausgebildet sein, um das dreidimensionale Netzgebilde mit zusätzlichen Schlaufen engmaschiger auszubilden. Figur 9c) zeigt ein aus vier Zackenfasern (408) gebildetes dreidimensionales Netz des dargestellten Falldämpferelements, wobei jeder der Fasern über ein Federgelenk (407) in einer von mehreren radial und longitudinal am Korpus (330) verteilten Vertiefungen (332) eingesetzt ist. Falls erforderlich oder gewünscht können in weitere Vertiefungen (332) zusätzliche Fasern eingesetzt werden, um das dreidimensionale Netzgebilde engmaschiger auszubilden.

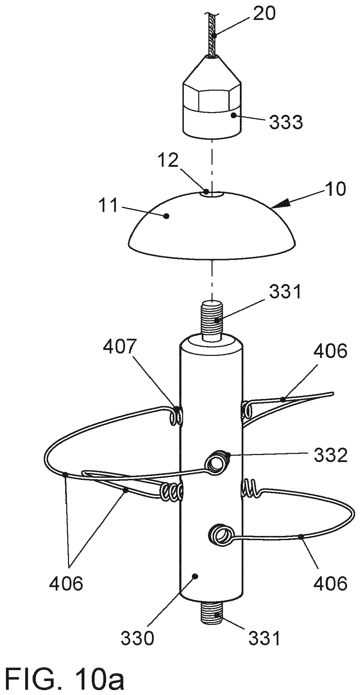

Figur 10a zeigt ein Falldämpferelement mit einem aus vier Schlaufen (406) gebildeten dreidimensionalen Netz, wobei beide Enden jeder der Schlaufen als Federgelenke (406) ausgebildet sind und in einer von insgesamt acht radial und longitudinal am Korpus (330) verteilten Vertiefungen (332) eingesetzt sind. An den beiden Enden des Korpus (330) sind Schraubgewinde (331) ausgebildet, welche zur Verbindung mit dem, z.B. aus einem Stahlseil gefertigte, Trägerseil (20) dienen. An den Seilenden des Trägerseils (20) sind zu diesem Zweck Schraubkappen (333) befestigt. Schraubkappen (333) und Korpus (330) haben in etwa identische radiale Durchmesser. Vor dem Zusammenbau der erfindungsgemäßen Vorrichtung wird oberhalb des jeweiligen Falldämpferelementes der schirmförmigen Füllgutabweiser (10) mit konkav in Fallrichtung gekrümmter Mantelfläche (11) über die Bohrung (12), welche mittig in dessen schirmförmiger Seiten- oder Mantelfläche (11) ausgebildet ist, auf den Korpus (330) aufgesetzt und das durch die Bohrung (12) des Füllgutabweisers (10) ragende Ende des Schraubgewindes (331) wird mit der Schraubkappe (333) verschraubt.

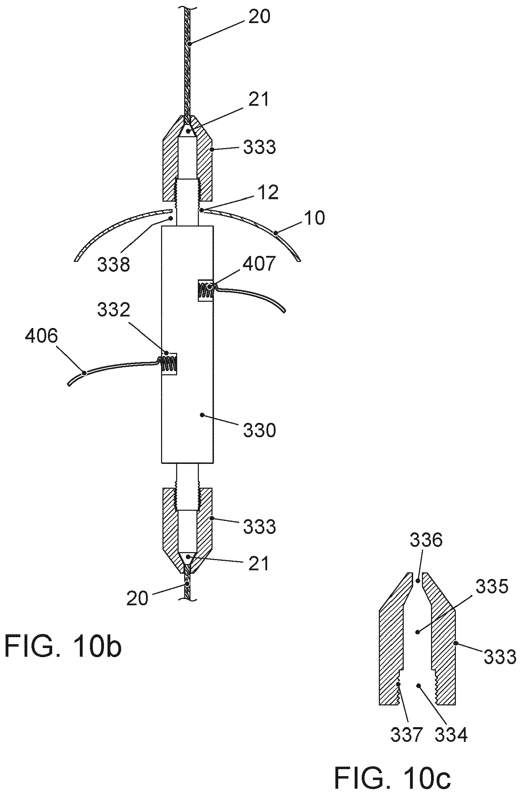

Figur 10b zeigt einen Querschnitt eines gemäß Expositionszeichnung nach Figur 10a mit einem Träger (20) verbundenen Falldämpferelementes gemäß Figur 9b. Die kegelförmig verdickten Seilenden (21) sitzen formschlüssig in der Schraubkappe (333). Im verschraubten Zustand berühren sich Schraubkappe (333) und Korpus (330) nicht sondern bilden im Bereich des freiliegenden Gewindeabschnitts des Schraubgewindes (331) einen Sitz (338) für den Füllgutabweiser (10) der die longitudinale Beweglichkeit des darin eingesetzten Füllgutabweisers entlang des Schraubgewindes 331 begrenzt. Durch geeignete Wahl von Höhe des Sitzes (338) und Wandstärke des Füllgutabweisers (10) sowie Durchmesser der Öffnung (12) im Füllgutabweiser (10) lässt sich dessen Spiel in gewünschter Weise einstellen. Hier ist er so bemessen, dass der Füllgutabweiser (10) im eingebauten Endzustand um die Längsachse der Vorrichtung (und um das Schraubgewinde (331)) drehbar sowie seitlich kippbar bleibt.
Figur 10c zeigt einen Querschnitt durch eine erfindungsgemäße Schraubkappe (333), wie sie in den Figuren 10a oder 10b dargestellt ist. In der unteren Hälfte ist das zum Schraubgewinde (331) korrespondierende Innengewinde (337) ausgebildet. Die Ausnehmung (334) dient zur formschlüssigen Verschraubung mit dem Schraubgewinde (331) des Falldämpferelementes. Die Ausnehmung (334) setzt sich nach oben in einer Verjüngung (335) fort. Diese dient einerseits als Anschlag für das Schraubgewinde (331) sowie als Aufnahme für das formschlüssig ausgebildete Seilende (21) des Trägerseils (20), welches durch die obige Bohrung (336) der Schraubkappe (333) geführt wird. Die Längen des Schraubgewindes (331) sowie des Innengewindes (337) sind so aufeinander abgestimmt, dass bei vollständiger Verschraubung von Korpus (330) mit Schraubkappe (333) ein Abstand zwischen den beiden Enden von Korpus (330) und Schraubkappe (333) bleibt, der dann als Sitz (338) für den Füllgutabweiser (10) dient.

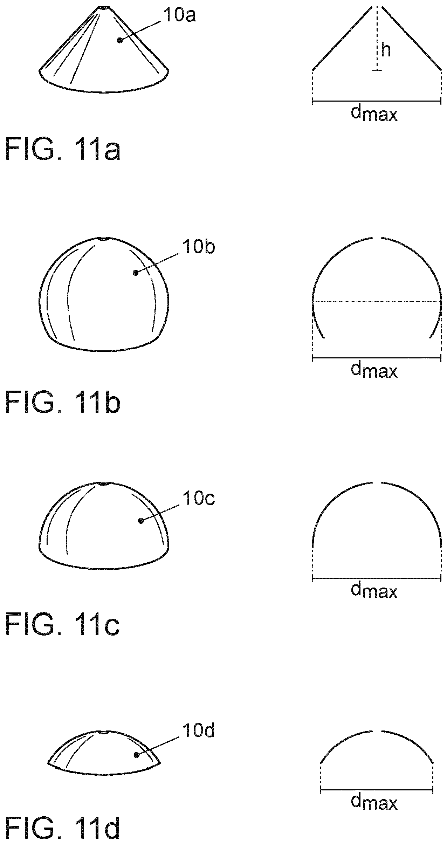

Figur 11 zeigt verschiedene Ausgestaltungen erfindungsgemäßer schirmförmiger Füllgutabweiser (10). Links dargestellt ist jeweils eine perspektivische Ansicht, rechts daneben der Querschnitt durch den jeweiligen Füllgutabweiser. Figur 11a zeigt einen kegelförmig ausgebildeten Schirm (10a), Figur 11b zeigt einen tulpenförmig ausgebildeten Schirm (10b), Figur 11c zeigt einen halbkugelförmig ausgebildeten Schirm (10c) und Figur 11d zeigt einen kegelförmigen Schirm (10d) mit gekrümmter Seiten- oder Mantelfläche. In den zugeordneten Querschnitten ist die jeweiligen maximale Schirmbreite (dₘₐₓ) ebenso wie die Schirmhöhe h (beispielhaft in Figur 11a) angegeben.

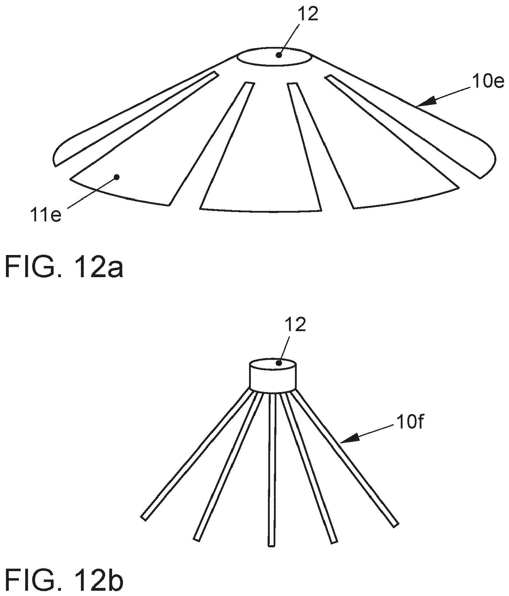

Figur 12 zeigt zwei weitere Ausgestaltungen erfindungsgemäß brauchbarer Füllgutabweiser (10e und 10f). Figur 12a zeigt dabei einen kegelförmigen Schirm (10e), welcher eine mehrfach geschlitzte Seiten- oder Mantelfläche (11e) aufweist und somit lamellenartig ausgebildet ist. Figur 12b zeigt dagegen einen mehrstückigen, aus radial und schräg nach unten in Befüllrichtung weisenden, geraden Borsten gebildeten Füllgutabweiser (10f). Die Borsten sind an ihrem oberen Ende mittels eines Metallringes zusammengefasst. Über deren Öffnungen (12) sind die beiden Füllgutabweiser (10e,10f) am Korpus des Falldämpferelements, z.B. wie in Figur 10a gezeigt, befestigbar.

### Detaillierte Beschreibung der Erfindung

### a) Allgemeine Definitionen

"Durchlässig" im Sinne der Erfindung ist ein Netzgebilde, wenn die Füllgutpartikel während des Befüllens des Rohres durch das Netzgebilde nicht ungehindert hindurchtreten, sondern mit wenigstens einem Netzelement des Netzgebildes in Kontakt gelangen und auf diese Weise ihre Fallgeschwindigkeit reduziert wird.

Unter einem "Netzgebilde" im Sinne der Erfindung ist dabei eine radiale "offene" oder "geschlossene" Anordnung einzelner, wenigstens eines (wie z.B. eines zu einzelnen Schlaufen formbaren Metalldraht-Fadens), insbesondere wenigstens zweier Netzelemente (z.B. Schlaufen, Zackenfasen, gekrümmten Fasern oder Kombinationen davon) am Falldämpferelement zu verstehen. Darüber hinaus zeichnet sich ein erfindungsgemäßes Netzgebilde dadurch aus, dass sich einzelne, wie insbesondere wenigstens zwei, Netzelemente, wie Fasern, Zackenfasern, Schlaufen oder Fäden oder Kombinationen davon, in ihrer vertikalen Projektion, d.h. in der Draufsicht auf das(die) Falldämpferelement(e) (bzw. in der entlang der Längsachse des Rohres verlaufenden Befüllvorrichtung) kreuzen oder überschneiden oder miteinander verbunden sind, insbesondere kreuzen oder überschneiden. Beispielsweise liegen derartige Überkreuzungen oder Überschneidungen spätestens dann vor, wenn die Befüllvorrichtung in das zu befüllende Rohr eingesetzt ist. Vorzugsweise sind diese Überkreuzungen oder Überschneidungen aber bereits vor dem Einbringen des Falldämpferelements in das zu befüllende Rohr ausgebildet. Sie können aber auch erst nach dessen Einbringen in das Rohr durch radiales Zusammendrücken einzelner Netzelemente gebildet werden (insbesondere bei Verwendung von gekrümmten Fasern als Netzelemente). Bei "offener" Anordnung sind die Elemente einseitig, d.h. mit einem Ende, am Falldämpferelement befestigt, (z.B. Fasern oder Zackenfasern, wie hierin beschrieben)befestigt; bei "geschlossener" Anordnung sind die Netzelemente beidseitig befestigt und einzelne Elemente greifen gegebenenfalls zusätzlich ineinander (z.B. Schlaufen). Die Netzelemente sind zudem radial und longitudinal so verteilt, dass der vertikale (d.h. longitudinale) Durchgang der Füllgutpartikel durch das Falldämpferelement durch ein- oder insbesondere mehrfachen Kontakt eines Füllgutpartikels mit einzelnen Netzelementen behindert und damit in seiner Fallgeschwindigkeit schonend gebremst wird.

"Netzelemente" sind erfindungsgemäß elastisch ausgebildete Fasern, Endlosfasern, Zackenfasern, Schlaufen oder Fäden. Durch geeignete radiale und longitudinale Anordnung wenigstens eines Netzelements, insbesondere wenigstens zweier Netzelemente wird eine erfindungsgemäßes Netzgebilde bereitgestellt, in welchem die einzelnen Elemente zusammenwirken und die auf die Füllgutpartikel eine falldämpfende Wirkung ausüben.

"Longitudinal" steht für die Bezeichnung der Richtung entlang der Längsachse, insbesondere eines zu befüllenden geraden Rohres.

Ein "maximaler radialer Durchmesser" "dₘₐₓ" eines Falldämpferelements bezeichnet den durch Draufsicht auf ein Falldämpferelement in Richtung dessen Längsachse ermittelbaren größten Durchmesser. Diese ist vorzugsweise kleiner als der Innendurchmesser "dₗ" des zu befüllenden Rohres.

Eine "Zackenfaser" ist synonym für eine gezackt ausgebildetes Netzelement. Dazu werden in einem Faser oder Doppelfaser wenigstens eine, vorzugsweise aber mehrere, wie z.B. 2 bis 20 oder 3 bis 10, zackenförmige Biegungen ausgebildet Die Biegungen können dabei in einer Ebene ausgebildet sein oder um die Längsachse der Zackenfaser radial verteilt sein.

"Schirmförmig" steht erfindungsgemäß als Sammelbegriff für im Wesentlichen radialsymmetrische Gebilde mit nach außen im Wesentlichen gleichmäßig abfallender Seitenfläche; insbesondere steht der Begriff für "kegelförmige" "tulpenförmige" oder "halbkugelförmige" Gebilde.

"Kegelförmig" umfasst insbesondere Kegel- oder Hohlkegel-artig ausgebildete Strukturen in Form einer Mantelfläche (oder Kegelmantelfläche) eines rotationssymmetrischen Kreiskegels mit Mantellinien, die gerade von der unteren Kante zur nach oben weisenden Spitze des Kegels verlaufen (in Form eines "chinesischen Huts)".

"Kegelförmig" umfasst aber auch bauchige Strukturen, mit nicht gerade verlaufenden, bauchigen Mantellinien. Derartige schirmförmige Elemente weisen im Wesentlichen die Form einer Mantelfläche eines rotationssymmetrischen Kreiskegels auf, wobei die Kegelspitze nach oben weist und die Mantellinien gekrümmt, insbesondere konkav verlaufen. Beispielsweise sind diese schirmförmigen Elemente so ausgebildet, dass an jedem Punkt ihrer Mantellinien derjenige Winkel, den eine Tangente der Mantellinie mit der Achse des Kegels einschließt, zwischen 10 bis 90°, 30 bis 85°, 40 bis 85° oder insbesondere 50° bis 80° beträgt.

Der "Zentralbereich" entspricht dem während des Befüllvorgangs mechanisch am stärksten belasteten in der Draufsicht (oder vertikalen Projektion) radialen Mittelabschnitts eines Falldämpferelements und besitzt in etwa 90 bis 10%, vorzugsweise 60 bis 15% oder besonders bevorzugt 40 bis 20% des radialen Durchmessers (dₘₐₓ) des Falldämpferelements (3).

Hierin werden Merkmale, Parameter und Bereiche davon mit unterschiedlichem Präferenzgrad (einschließlich allgemeiner, nicht expliziter bevorzugter Merkmale, Parameter und Bereiche davon) offenbart. Sofern nicht anders angegeben, ist jede Kombination zweier oder mehrerer solcher Merkmale, Parameter und Bereiche unabhängig von ihrem jeweiligen Präferenzgrad durch die Offenbarung der vorliegenden Beschreibung umfasst.

### b) Bevorzugte Ausführungsformen

Die vorliegende Erfindung betrifft insbesondere folgende bevorzugte Ausführungsformen. Sämtliche durch Rückbezug abgeleiteten Merkmalskombinationen gelten hiermit als explizit offenbart.

Die Erfindung betrifft folgende besondere Ausführungsformen:
1. Vorrichtung (1) zum Befüllen eines, longitudinalen, geraden Rohres mit im Wesentlichen konstantem Innendurchmesser, insbesondere mit einem Innendurchmesser von mehr als 50mm, wie z.B. 55 bis 300 oder 70 bis 300 mm), beispielsweise mit Rohrlängen 1 bis 20 oder insbesondere von 3 bis 17 oder 2 bis 15 Metern, mit partikelförmigem Füllgut, wie insbesondere Katalysatorpartikeln, umfassend wenigstens ein an einem zentralen Träger (2) befestigtes, und zusammen mit dem Träger (2) in das zu befüllende Rohr einführbares elastisches Falldämpferelement (3), vorzugsweise aber eine Vielzahl (z.B. 2 bis 10 oder 3 bis 5) von seriell am Träger (2) befestigter elastischer Falldämpferelemente (3),
   dadurch gekennzeichnet, dass
   oberhalb des wenigstens einen Falldämpferelements (3), insbesondere oberhalb des an dem wenigstens einen Falldämpferelement (3) ausgebildeten Netzgebildes, ein radial, insbesondere im Wesentlichen radialsymmetrisch, den Träger (2) umschießender Füllgutabweiser (10) angeordnet ist, dessen Außendurchmesser geringer ist als der Innendurchmesser des zu befüllenden Rohres und vorzugsweise der seitliche Abstand zwischen Rohrinnenseite und Füllgutabweiser (d.h. dessen Außenkante bzw. dessen Bereich mit maximalem Durchmesser dₘₐₓ) so bemessen ist, dass er den Durchgang bzw. die Passage der Füllgutpartikel erlaubt.
   Insbesondere trägt dabei das wenigstens eine Falldämpferelement (3) ein für die Füllgutpartikel durchlässiges elastisches Netzgebilde (4), wobei das Netzgebilde (4) eine Vielzahl elastischer Netzelemente (40) umfasst, und der Füllgutabweiser ist oberhalb des Netzgebildes (4) angeordnet.
   Vorzugsweise ist dabei der Füllgutabweiser (10) schirmförmig ausgebildet und schützt den Zentralbereich des wenigstens einen Falldämpferelements (3) während eines Befüllvorganges vor direktem Aufprall von Füllgutpartikeln.
   Insbesondere ist der maximalen Durchmesser (dₘₐₓ) (in vertikaler Projektion) des Falldämpferelements (3) größer als der maximale Durchmesser (dₘₐₓ) (in vertikaler Projektion) des Füllgutabweisers (10). Insbesondere liegt das Durchmesserverhältnis (dₘₐₓ (Falldämpferelement) : dₘₐₓ (Füllgutabweiser)) im Bereich von 1 : 0,9 bis etwa 1 : 0,1, vorzugsweise 1: 0,6bis 1: 0,15 oder besonders bevorzugt 1:0,4 bis 1 : 0,2.
2. Vorrichtung nach Ausführungsform 1, wobei das Netzgebilde einen mittigen, vorzugsweise zylindrischen, Korpus (33, 330) umfasst, der die Netzelemente (400, 401, 402, 404, 405, 406, 408) trägt.
   Insbesondere ist der Füllgutabweiser (10) ist in seiner maximalen radialen Abmessung (dₘₐₓ) breiter als Korpus (33, 330).
   Für die optimale Ausgestaltung des Durchmesserverhältnisses von Falldämpferelement (3) und Füllgutabweiser (10) ist zu beachten, dass die Füllgutabweiser (10) den mechanisch am stärksten belasteten Zentralbereich eines Falldämpferelementes (3) bzw. den Zentralbereich des entsprechenden Netzgebildes (4), und insbesondere den inneren Abschnitt der einzelnen Netzelemente (400, 401, 402, 404, 405, 406, 408) davon, über welchen diese am Korpus (33, 330) des Falldämpferelements befestigt sind, vor dem direkten Aufprall von Füllgutpartikeln schützen, andererseits aber die Befüllgeschwindigkeit nicht wesentlich verlangsamen oder sogar ein Verstopfen des Rohrreaktors mit Füllgut während des Befüllvorgangs verursachen.
   Insbesondere wird durch den Füllgutabweiser (10) (in der vertikalen Projektion/Draufsicht) der Zentralbereich des Falldämpferelementes (3) bzw. des entsprechenden Netzgebildes (4) abgedeckt.
   Der Zentralbereich erstreckt sich in etwa radialsymmetrisch um die vertikale Mittelachse des Falldämpferelements (3). Er umfasst den mittigen Korpus (33,330) und den inneren Abschnitt des Netzgebildes (4), und insbesondere den inneren Abschnitt der einzelnen Netzelemente (400, 401, 402, 404, 405, 406, 408). Der Zentralbereich besitzt in etwa 90 bis 10%, vorzugsweise 60 bis 15% oder besonders bevorzugt 40 bis 20% des radialen Durchmessers (dₘₐₓ) des Falldämpferelements (3), wie beispielsweise in den beiliegenden Figuren näher dargestellt.
3. Vorrichtung nach Ausführungsform 1 oder 2, wobei der Füllgutabweiser (10) am Träger (2) bewegbar, d.h. um die Trägerlängsachse drehbar und /oder seitlich kippbar, befestigt ist.
4. Vorrichtung nach einer der vorherigen Ausführungsformen, wobei der Füllgutabweiser (10) eine in Fallrichtung des Füllguts geneigte, insbesondere von der Rohrmitte zur Rohrinnenwand geneigte Seitenfläche (11) aufweist.
5. Vorrichtung nach einer der vorherigen Ausführungsformen, wobei der Füllgutabweiser (10) einstückig oder mehrstückig ausgebildet ist.
6. Vorrichtung nach Ausführungsform 5, wobei der Füllgutabweiser (10) einstückig, vorzugsweise schirmförmig, insbesondere kegelförmig (z.B. in Form eines chinesischen Huts), tulpenförmig, halbkugelförmig oder kugelförmig, besonders bevorzugt kegelförmig (in Form eines chinesischen Huts) ausgebildet ist.
7. Vorrichtung nach Ausführungsform 5, wobei der Füllgutabweiser (10) mehrstückig ausgebildet ist und eine Vielzahl ( z.B. 3 bis 20 oder 4 bis 10) von Lamellen oder Borsten umfasst, die radialsymmetrisch zu einem Füllgut-undurchlässigen Schirm angeordnet sind.
8. Vorrichtung nach einer der vorherigen Ausführungsformen, wobei der Füllgutabweiser (10) in einem am Träger (2) ausgebildete Sitz drehbar und kippbar befestigt ist und dadurch von benachbart angeordneten Netzgebilden (4) beabstandet ist.
9. Vorrichtung nach einer der vorherigen Ausführungsformen, wobei der Füllgutabweiser (10) in der vertikalen Projektion einen maximalen Durchmesser d_{max.} aufweist, der etwa 5 bis 50% oder 5 bis 30% oder bevorzugt 5 bis 20%, wie insbesondere 7 bis 20%, wie z.B. 7 bis 15% des Rohrinnendurchmessers (dₗ) des zu befüllenden Rohres entspricht.
   Gleichzeitig ist dabei der Füllgutabweiser (10) in seiner maximalen radialen Abmessung (dₘₐₓ) breiter als Korpus (33, 330).
10. Vorrichtung nach einer der vorherigen Ausführungsformen, wobei der Füllgutabweiser (10) an seiner breitesten Stelle einen radialen Durchmesser (dₘₐₓ) aufweist, der etwa 5 bis 60%, 5 bis 50% oder 5 bis 30% oder bevorzugt 5 bis 20%, wie insbesondere 7 bis 20%, wie z. B. 7 bis 15% des Rohrinnendurchmessers (dₗ) des zu befüllenden Rohrs entspricht.
   Gleichzeitig ist dabei der Füllgutabweiser (10) ist in seiner maximalen radialen Abmessung (dₘₐₓ) breiter als Korpus (33, 330).
11. Vorrichtung nach einer der vorherigen Ausführungsformen, wobei der Füllgutabweiser (10) mittig eine Höhe (hₘₐₓ) aufweist, die in etwa 2 bis 60% oder bevorzugt 5 bis 20%, oder z.B. 10 bis 30% oder 10 bis 20% des Rohrinnendurchmessers (dₗ) des zu befüllenden Rohrs entspricht.
   Gleichzeitig ist dabei der Füllgutabweiser (10) ist in seiner maximalen radialen Abmessung (dₘₐₓ) breiter als Korpus (33, 330).
12. Vorrichtung nach einer der vorherigen Ausführungsformen, wobei der Füllgutabweiser (10) so ausgebildet ist, dass er ein Verhältnis von dₘₐₓ: hₘₐₓ im Bereich von 1:0.1 bis 1:5 , wie z.B. 1:0,5 bis 1:2, aufweist.
   Beispielsweise kann ein erfindungsgemäßer Füllgutabweiser (10) so ausgebildet sein, dass eine kegelförmigen, rotationssymmetrischen Hohlkörper aufweist.
   Beispielsweise kann der Füllgutabweiser (10) einen Durchmesser (dₘₐₓ) im Bereich von 15 bis 50mm, insbesondere von 15 bis 35 mm, vorzugsweise 20 bis 30 mm, und eine Höhe (hₘₐₓ) von 3 bis 30 mm, insbesondere 5 bis 15 mm oder vorzugsweise 5 bis 10 mm, aufweisen.
13. Vorrichtung nach einer der Ausführungsformen 2 bis 12, wobei der Füllgutabweiser (10) so ausgebildet ist, dass sein radialer Durchmesser dₘₐₓ größer ist als der radiale Durchmesser des mittigen, vorzugsweise zylindrischen, Korpus (33, 330).
   Der Korpus kann z.B. einen radialen Durchmesser von 5 bis 30 mm, insbesondere 8 bis 20mm oder vorzugsweise 10 bis 15 mm aufweisen.
   Gleichzeitig ist dabei der Füllgutabweiser (10) ist in seiner maximalen radialen Abmessung (dₘₐₓ) breiter als Korpus (33, 330).
14. Vorrichtung nach einer der vorherigen Ausführungsformen, wobei das Netzgebilde (4) einen maximalen radialen Durchmesser dₘₐₓ aufweist, der etwa dem Rohrinnendurchmesser dₗ ± 20 %, wie z.B. ± 15 , ± 10 oder ± 5% entspricht.
15. Vorrichtung nach einer der vorherigen Ausführungsformen, dadurch gekennzeichnet, dass das Netzgebilde (4) von wenigstens zwei elastischen Netzelementen (40) gebildet wird, die sich in ihrer vertikalen Projektion wenigstens einmal überschneiden.
16. Vorrichtung nach einer der vorhergehenden Ausführungsformen, dadurch gekennzeichnet, dass das Netzgebilde (4) in seiner vertikalen Projektion asymmetrisch ausgebildet ist.
17. Vorrichtung nach einer der vorhergehenden Ausführungsformen, dadurch gekennzeichnet, dass das Netzgebilde (4) in seiner lateralen Projektion asymmetrisch ist.
18. Vorrichtung nach einer der vorhergehenden Ausführungsformen, dadurch gekennzeichnet, dass die Netzelemente (40) radial und longitudinal verteilt am Falldämpferelement (3) angeordnet sind.
19. Vorrichtung nach einer der vorhergehenden Ausführungsformen, dadurch gekennzeichnet, dass die Netzelemente (40) am Falldämpferelement (3), insbesondere über Federgelenke (407), befestigt sind.
20. Vorrichtung nach einer der vorhergehenden Ausführungsformen, wobei die Netzelemente (40) als Schlaufen (401) ausgebildet sind, deren beide Enden am Falldämpferelement (3) befestigt sind.
21. Vorrichtung nach Ausführungsform 20, wobei wenigstens zwei Schlaufen (401) ineinander greifen, und insbesondre eine Schlaufe durch die andere durchgeführt wird.
22. Vorrichtung nach einer der vorhergehenden Ausführungsformen, dadurch gekennzeichnet, dass die Netzelemente (40) als radial gekrümmte Fasern (400) mit einem freien und einem am Falldämpferelement (3) befestigten Ende ausgebildet sind.
23. Vorrichtung nach Ausführungsform 22, dadurch gekennzeichnet, dass die Fasern (400) eines Falldämpferelements (3) gleiche oder verschiedene Krümmungsradien aufweisen.
24. Vorrichtung nach Ausführungsform 22 oder 23, dadurch gekennzeichnet, dass die am Falldämpferelement (3) befestigten Fasern (400) eines Falldämpferelements (3) in und/oder gegen die Fallrichtung des Schüttguts geneigt sind.
25. Vorrichtung nach einer der Ausführungsformen 22 bis 24, dadurch gekennzeichnet, dass die Länge der Faser (400) größer als der Rohrradius ist.
26. Vorrichtung nach einer der Ausführungsformen 22 bis 25, dadurch gekennzeichnet, dass die Fasern (400) des Falldämpferelements (3), insbesondere in ihrer vertikalen Projektion, d.h. bei Draufsicht auf das Falldämpferelement (3), gleiche oder entgegengesetzte Krümmungsrichtung aufweisen.
27. Vorrichtung nach einer der vorhergehenden Ausführungsformen, dadurch gekennzeichnet, dass das Netzgebilde (4) aus rostfreiem Stahl (Stahldraht) gefertigt ist.
28. Vorrichtung nach einer der vorhergehenden Ausführungsformen, umfassend ein bis fünf Falldämpferelemente (3) pro Längeneinheit (insbesondere pro Meter).
29. Vorrichtung nach einer der vorhergehenden Ausführungsformen, wobei das Falldämpferelement eine Länge von 5 bis 20 Zentimetern aufweist und pro Zentimeter 0,5 bis 5 Netzelemente (4) trägt.
30. Vorrichtung nach einer der vorhergehenden Ausführungsformen, wobei der Träger (2) Federelemente (8) umfasst oder aus einer Vielzahl von Federelementen (8) gebildet wird.
31. Vorrichtung nach Ausführungsform 30, wobei das Federelement (8) zwei benachbarte Falldämpferelemente (3) federnd verbindet.
32. Vorrichtung nach einer der vorhergehenden Ausführungsformen, dadurch gekennzeichnet, dass der Träger (2) mit einer optischen Überwachungsvorrichtung (5) kombiniert ist.
33. Vorrichtung nach Ausführungsform 32, dadurch gekennzeichnet, dass die optische Überwachungsvorrichtung (5) am distalen Ende mit einer Linse/Detektor (51) und gegebenenfalls einer Lichtquelle (52) und am proximalen Ende mit einem Monitor (53) verbunden ist.
34. Vorrichtung nach Ausführungsform 33, wobei die Überwachungsvorrichtung einen flexiblen Lichtleiter (50) umfasst.
35. Vorrichtung nach Ausführungsform 34, wobei der Lichtleiter (50) gleichzeitig Träger (2) der Falldämpferelemente (3) ist.
36. Vorrichtung nach einer der Ausführungsformen 33 bis 35, wobei die Linse (51) unterhalb des untersten Falldämpferelements (3) der Vorrichtung (1) angeordnet ist.
37. Verwendung einer Vorrichtung nach einer der vorhergehenden Ausführungsformen zum Befüllen eines Rohrreaktors mit Katalysatorpartikeln.
38. Verwendung nach Ausführungsform 37, dadurch gekennzeichnet, dass der Rohrreaktor einen Innendurchmesser von 70 bis 300 mm aufweist.
39. Verfahren zur Befüllung einer vertikal angeordneten Röhre mit partikelförmigem Material, dadurch gekennzeichnet, dass man die Vorrichtung (1) über das obere Ende der Röhre soweit einführt dass das unterste Falldämpferelement (3) den Röhrenboden nicht berührt, und die Vorrichtung entgegen der Fallrichtung der Partikel während der Befüllung aus der Röhre entfernt.
40. Verfahren nach Ausführungsform 39, dadurch gekennzeichnet, dass Vorrichtung kontinuierlich oder schrittweise aus der Röhre entfernt wird.
41. Verfahren nach einer der Ausführungsformen 39 und 40, dadurch gekennzeichnet, dass man den Füllvorgang unterbricht, wenn die Befüllung ungleichmäßig erfolgt ist.
42. Optische Überwachungsvorrichtung (5), umfassend einen optischen Lichtleiter (50), an dessen Eingang eine optische Sammellinse (51) gegebenenfalls zusammen mit einer Lichtquelle (52) ausgebildet ist, und dessen Ausgang mit einem Empfänger (53) verbunden ist, wobei die Vorrichtung (5) zusätzlich Falldämpferelemente (3) gemäß der Definition in einer der Ausführungsformen 1 bis 29 aufweist.
   Ein weiterer besonders bevorzugter Gegenstand der Erfindung betrifft
43. Vorrichtung (1) (gemäß EP-B-1 749 568), zum Befüllen eines Rohrreaktors mit einem Rohrinnendurchmesser im Bereich von 70 bis 300 mm mit partikelförmigem Schüttgut, umfassend wenigstens ein an einem longitudinalen flexiblen Träger (2) befestigtes, und zusammen mit dem Träger (2) in das zu befüllende Rohr einführbares Falldämpferelement (3), dadurch gekennzeichnet, dass das Falldämpferelement (3) ein für die Schüttgutpartikel durchlässiges Netzgebilde (4) trägt, wobei das Netzgebilde (4) von einer Vielzahl elastischer Netzelemente (40) gebildet wird, wobei
   die Netzelemente (40) radial und longitudinal verteilt am Korpus (33) des Falldämpferelements (3) angeordnet sind,
   sich wenigstens zwei Netzelemente (40) in ihrer vertikalen Projektion überschneiden, und
   das Falldämpferelement (3) eine Länge von 5 bis 20 Zentimetern aufweist und pro Zentimeter 0,5 bis 5 Netzelemente (40) trägt, wobei die Gesamtzahl der Netzelemente (40) je Falldämpferelement (3) 3 bis 20 ist, und wobei die Netzelemente (40) Schlaufen sind, deren beide Enden am Falldämpferelement (3) befestigt sind;
   und wobei oberhalb des Netzgebildes (4) des wenigstens einen Falldämpferelements (3) ein Füllgutabweiser (10) wie hierin definiert, insbesondere wie oben für die Ausführungsformen 1 bis 13 definiert, ausgebildet ist.

Weiterhin sind besonders bevorzugt Vorrichtungen nach einer der obigen Ausführungsformen 1 bis 36 und 43, mit einem Füllgutabweiser (10), der wie in einer der Figuren 10a, 10b, 11a bis 11d, 12a oder 12b dargestellt, ausgebildet ist.

### c) Weitere Ausgestaltungen der Erfindung

Werden keine anderen Angaben gemacht so dienen folgende Angaben der weiteren Ausgestaltung der oben bereits beschriebenen Ausführungsformen.

Gegenstand der Erfindung ist eine Vorrichtung zum, vorzugsweise vertikalen, Befüllen eines Rohres mit partikelförmigem Füllgut, umfassend wenigstens ein an einem longitudinalen Träger befestigtes, und zusammen mit dem länglichen Träger in das zu befüllende Rohr einführbares Falldämpferelement, dadurch gekennzeichnet, dass das Falldämpferelement ein für die Füllgutpartikel durchlässiges, flexibles, insbesondere irreguläres Netzgebilde trägt, das aus einer Vielzahl von, vorzugsweise gekrümmten, Netzelementen, wie z.B. Fasern, Schlaufen, Fäden, Zackenfasern, gebildet wird, wobei sich vorzugsweise wenigstens zwei Netzelemente des gleichen Falldämpferelements oder zweier, vorzugsweise benachbarter Falldämpferelemente, in ihrer vertikalen Projektion wenigstens einmal überschneiden und wobei vorzugsweise oberhalb eines jeden Falldämpferelements ein Füllgutabweiser wie oben beschrieben diesem zugeordnet ist. Insbesondere sind jedes Falldämpferelement und der zugeordnete Füllgutabweiser zwei getrennte Bauteile der Vorrichtung

Die hierin beschriebenen Füllgutabweiser können aus unterschiedlichen Materialien gefertigt sein, wie z.B. aus Kunststoff, Kunststoffverbundmaterial, faserverstärktem Kunststoff, oder, vorzugsweise aus Metall, wie z.B. Stahlblech oder Federstahlblech. Typischerweise liegt die Wandstärke eines solchen Materials im Bereich von 0,5 bis 5 mm, wie z.B 1 bis 2 mm, vorzugsweise aber 0,5 bis 1, 5 mm.

Insbesondere ist das erfindungsgemäße Netzgebilde (dreidimensionale Netz) so ausgestaltet, dass es vor Einführen in das Rohr einen maximalen radialen Durchmesser dₘₐₓ aufweist, der etwa dem Rohr-Innendurchmesser dₗ ± 20 % entspricht. Beispielsweise kann dₘₐₓ = dₗ + 15 % bis dₗ -15 %, oder dₗ + 5 % bis dₗ -5 % sein. Meist ist dₘₐₓ = dₗ + 2 % bis dₗ - 5 % oder dₗ ± 0 % bis dₗ - 2 %. Vorzugsweise ist das erfindungsgemäße Netzgebilde (dreidimensionale Netz) so ausgestaltet, dass es (bereits vor dem Einführen in das Rohr und auch im Rohr) einen maximalen radialen Durchmesser dₘₐₓ aufweist, der geringer ist als der Rohr-Innendurchmesser, z.B. dₗ - 20 %. Beispielsweise kann dₘₐₓ = dₗ - 15 % oder dₗ - 5 % sein. Meist ist dₘₐₓ = dₗ - 5 % oder dₗ - 2 %. Typische Rohr-Innendurchmesser dₗ von erfindungsgemäß befüllbaren Rohren liegen im Bereich von mehr als 50 mm, wie z.B. 70 bis 300 mm oder 100 bis 200 mm.

In einer weiteren Ausgestaltung der Erfindung ist das Netzgebilde aus einer Vielzahl, insbesondere wenigstens 2, vorzugsweise elastischen und insbesondere gekrümmten Netzelementen gebildet.

Art und Weise der Befestigung einzelner Netzelemente am Falldämpferelement kann auf beliebigem Weg erfolgen, wobei eine Austauschbarkeit defekter Elemente bevorzugt gewährleistet sein sollte. So können einzelne Elemente mit dem Korpus des Falldämpferelements verlötet oder verklebt sein. Vorteilhaft können auch Vertiefungen im Korpus vorgesehen sein, in denen die Elemente befestigt sind. Zur weiteren Verbesserung der Flexibilität der einzelnen Elemente können diese Federgelenke aufweisen, z.B. hergestellt durch spiralförmiges Verdrillen eines Endes eines faserförmigen Netzelements, und über diese Federgelenke mit dem Korpus des Falldämpferelements verbunden, wie z.B. verklebt, sein.

Auch die Anzahl der Netzelemente je Falldämpferelement kann über einen weiten Bereich schwanken. Sie ist aber so gewählt, dass die Füllgutpartikel am freien Durchtreten durch das Falldämpferelement behindert werden. In Abhängigkeit von der Füllgutpartikelgröße kann daher die geeignete Anzahl von Netzelementen durch wenige Vorversuche bestimmt werden.

Durch irreguläre Anordnung der Netzelemente kann die falldämpfende Wirkung des Netzgebildes weiter verbessert werden. Dabei ist das Netzgebilde in seiner vertikalen Projektion, d.h. in der Draufsicht, asymmetrisch ausgebildet.

Weiterhin kann das Netzgebilde in seiner lateralen Projektion, d.h. in seiner Seitenansicht, ebenfalls asymmetrisch sein.

Die Netzelemente sind insbesondere radial und longitudinal (d.h. axial und in Längsrichtung) verteilt am Falldämpferelement angeordnet, insbesondere dort lösbar befestigt, so dass ein Ersetzen einzelner Elemente im Falle eines Defektes erleichtert wird.

Um ein erfindungsgemäßes Netzgebilde auszubilden, können die Netzelemente in unterschiedlicher Form vorliegen. Die Netzelemente können beispielsweise als Schlaufen ausgebildet sein, deren beide Enden am Falldämpferelement lösbar befestigt sind. Innerhalb eines Netzgebildes können einzelne, wie z.B. wenigstens zwei, benachbarte Schlaufen ineinander greifen.

Nach einer weiteren Ausführungsform der erfindungsgemäßen Vorrichtung können die Netzelemente als radial gekrümmte, elastische Fasern oder Zackenfasern mit einem freien und einem am Falldämpferelement befestigten Ende ausgebildet sein. Dabei können die Fasern eines einzelnen Falldämpferelements gleiche oder verschiedene Krümmungsradien oder Zackungswinkel aufweisen.

Die am Falldämpferelement befestigten Netzelemente, wie insbesondere die Fasern, Zackenfasern oder Schlaufen, können entweder vertikal zum Träger orientiert sein, oder aber in und/oder gegen die Fallrichtung des Füllguts geneigt sein.

Ein Falldämpferelement kann auch Netzelemente (Fasern, Zackenfasern, Schlaufen, Fäden) verschiedenen Typs in beliebiger Kombination enthalten.

Die Fasern, Zackenfasern oder Schlaufen eines Netzgebildes können gleiche oder verschiedene Länge aufweisen.

Beispielsweise weisen einzelne der Fasern eines Falldämpferelements, insbesondere deren Mehrzahl, d.h. mehr als 50%, wie z.B. 60, 70, 80, 90 oder 100%, eine Länge auf, die größer als der Rohrinnenradius ist. Beispielsweise kann deren Länge 1 bis 100 %, 5 bis 90 %, 10 bis 80 %, 20 bis 70% oder 30 bis 50 % größer als der Rohrinnenradius sein.

Beispielsweise weisen einzelne der Schlaufen oder Zackenfasern eines Falldämpferelements, insbesondere deren Minderzahl, d.h. weniger als 50%, wie z.B. 40, 30, 20 oder 1 bis 10%, eine Hauptachsenlänge auf, die größer als der Rohrinnenradius ist. Beispielsweise kann deren Länge um 1 bis 50 %, oder 2 bis 10 % oder 3 bis 5 % größer als der Rohrinnenradius sein. Bevorzugt ist aber, dass keine der Schlaufen oder Zackenfasern eines Falldämpferelements eine Hauptachsenlänge aufweisen, die größer als der Rohrinnenradius ist.

Der verbleibenden Teil der Netzelemente (wie Fasern, Zackenfasern und Schlaufen), vorzugsweise die Gesamtheit der Netzelemente, weist eine Länge, bzw. Hauptachsenlänge auf, die dem Rohrinnenradius entspricht oder um 1 bis 50%, wie z.B. 2 bis 20% oder 5 bis 10% kleiner ist.

Die am besten geeignete Ausgestaltung ist vom Fachmann einfach zu ermitteln. Einerseits wird er dabei darauf achten, dass das Einführen der Vorrichtung in das Rohr nicht unnötig erschwert wird und andererseits die falldämpfende Wirkung optimal ausgenutzt werden kann.

Ein erleichtertes Einführen der Vorrichtung in das Rohr und eine Straffung des Trägers kann z.B. auch dadurch erreicht werden, dass man am unteren Ende des Trägers ein geeignetes Gewicht befestigt, das die Träger nach Unten in das Rohr zieht.

Weiterhin besteht die Möglichkeit, dass die Fasern des Falldämpferelements gleiche oder entgegengesetzte Krümmungsrichtung aufweisen, so dass diese, im Falle entgegengesetzter Krümmungsrichtung ineinander verlaufen.

Außerdem können die verwendeten Zackenfasern über ihre gesamte Länge oder nur in einem Teilabschnitt gezackt ausgebildet sein.

Das erfindungsgemäße Netzgebilde kann aus verschiedenen geeigneten elastischen Materialien, wie z.B. Kunststoff oder Stahl, gefertigt sein. Rostfreier Stahl ist dabei besonders geeignet.

Die Anzahl der Netzelemente je Falldämpferelement, sowie die Geometrie der Netzelemente, wie Länge, Krümmung und Durchmesser der Fasern bzw. Schlaufen, in Abhängigkeit von Größe, Gewicht und Fallgeschwindigkeit der Füllgutpartikel können den Erfordernissen der jeweils vorzunehmenden Rohrbefüllung angepasst werden. Beispielsweise umfasst ein Falldämpferelement 1 bis 100, wie z.B. 3 bis 50 oder 5 bis 20, wie insbesondere 6 bis 12 oder 4 bis 8, Netzelemente.

Beispielsweise können die Netzelemente (z.B. der zu Herstellung verwendete Stahldraht) einen Durchmesser (Stärke) von 0,3 bis 1,5 mm, insbesondere 0,4 bis 0,8 oder 0,5 bis 0,6 mm aufweisen. Der Durchmesser kann dabei über die Gesamtlänge (z.B. der Schlaufe oder der Zackenfaser) gleich bleiben oder variieren. Beispielsweise können die einzelnen Falldämpferelemente zum Träger hin einen größeren Durchmesser und damit eine höhere Stabilität und geringere Elastizität als im Bereich der distalen Enden aufweisen.

Beispielsweise können pro Längeneinheit des Falldämpferelements in Zentimeter 0,5 bis 5 Netzelemente, wie z.B. 1, 2, 3, 4 Netzelemente angeordnet sein. Durch diese aufgelockerte Anordnung von elastischen Netzelementen, wird im Gegensatz zu den gemäß Stand der Technik verwendeten Vorrichtungen mit dichtem, bürstenartigem Besatz von relativ starren Borsten die Gefahr eines Partikelrückstaus und damit eines ungewollten Verstopfens des Rohres während des Befüllens wirksam verringert oder unterbunden. Damit kann bei Verwendung der erfindungsgemäßen Vorrichtung die Füllgeschwindigkeit im Vergleich zum Stand der Technik deutlich erhöht werden.

Anzahl und Ausgestaltung der Netzelemente können so gewählt werden, dass die Schüttgeschwindigkeit oder Füllleistung im Vergleich zu herkömmlichen Bürsten unter Standardbedingungen deutlich verbessert wird. So kann ein vertikales Rohr, wie z.B. ein Reformer-Rohr, beispielsweise mit einem Innendurchmesser von 100 mm und bei Verwendung von Katalysatorpartikeln mit einem Gewicht von etwa 2 bis 4 g und einem Durchmesser von etwa 15 bis 20 mm, wie z.B. 2g/16,1 mm oder 4g/19,6 mm, erfindungsgemäß mit einer Geschwindigkeit von 0,5 bis 1,5, insbesondere 0,5 bis 1,3, oder 0,8 bis 1,2 oder 0,9 bis 1,1 Minuten/Meter Rohr störungsfrei und ohne Beschädigung der Partikel befüllt werden. Mit herkömmlichen Bürsten und unter identischen Bedingungen sind dagegen maximale Füllgeschwindigkeiten von nur 1,36 bis 1,81 Minuten/Meter erreichbar.

Eine erfindungsgemäße Füllvorrichtung kann je nach Bedarf mit einer variablen Anzahl von Falldämpferelementen ausgestattet sein. Beispielsweise kann eine erfindungsgemäße Vorrichtung 1 bis 5, wie z.B. 2, 3 oder 4, Falldämpferelemente pro Längeneinheit, wie z.B. pro Meter, tragen. Die Gesamtzahl der Elemente kann z.B. im Bereich von 1 bis 50 oder 1 bis 20, wie z.B. 2 bis 15 oder 5 bis 10, je Vorrichtung liegen. Die Vorrichtung kann besonders vorteilhaft modular aufgebaut sein, d.h. im Falle eines Defekts oder bei Verschleiß können einzelne Elemente ausgetauscht werden. Beispielsweise können einzelne Falldämpferelemente abwechselnd mit Stahlseilen verbunden (z.B. verschraubt) sein.

Jedes einzelne Falldämpferelement kann eine Länge von 5 bis 20, wie z.B. 8 bis 12 Zentimetern aufweisen und pro Zentimeter 0,5 bis 5, wie z.B. 2, 3 oder4, Netzelemente, wie insbesondere Schlaufen, Zackenfasern oder Fasern, tragen.

Wie später noch erläutert, kann ein Falldämpferelement aber auch nur ein einziges fadenförmiges Netzelement umfassen, welches mehrfach unter Ausbildung von Schlaufen entlang des Falldämpferelements lösbar mit diesem verbunden ist.

Erfindungsgemäß kann es auch zweckmäßig sein, wenn die einzelnen Falldämpferelemente ebenfalls einen modularen Aufbau besitzen, so dass einzelne Netzelemente bei Bedarf rasch ersetzt werden können. Die gelingt beispielsweise dadurch, dass das Falldämpferelement aus einer Serie, wie z.B. 2 bis 10, miteinander verschraubbarer Segmente, wie z.B. Hülsen oder Muttern mit Innengewinde, zusammengesetzt ist. Die Netzelemente, wie z.B. die elastischen Fasern, Zackenfasern oder Schlaufen, können dann mit Hilfe von an der Faser, der Zackenfaser, der Schlaufe oder dem Faden ausgebildeten Ösen zwischen zwei solcher Segmenten eingesetzt, radial ausgerichtet und durch Verschrauben der Segmente fixiert werden.

Der erfindungsgemäße Träger der Füllvorrichtung ist flexibel ausgebildet und kann beispielweise eine Schnur, ein Band oder ein Seil sein. Im Allgemeinen besteht der flexible Körper aus geflochtenen, natürlichen oder synthetischen oder metallischen Fasern. Beispiele hierfür sind Seile aus Metall, wie Stahl, oder Nylon. Seile aus Edelstahl sind besonders bevorzugt.

Der Träger kann unterschiedliche Querschnitte aufweisen, hat vorzugsweise jedoch einen kreisförmigen Querschnitt. Typische Durchmesser liegen im Bereich von etwa 2 bis 10 mm, wie z.B. 3 bis 8 oder 3,5 bis 6 mm.

Eine weitere bevorzugte Ausführungsform der Vorrichtung ist so ausgebildet, dass der Träger selbst Federelemente umfasst oder aus einer Vielzahl von Federelementen gebildet wird. Diese Federelemente können beispielsweise Spiralfedern sein, die aus Metall, wie Stahl, gefertigt sind, die zwei benachbarte Falldämpferelemente federnd verbinden. Dadurch kann der Füllvorgang noch schonender durchgeführt werden. Die einzelnen Federelemente können bezüglich Geometrie und Federkraft den jeweiligen Anforderungen angepasst werden. Insbesondere größere oder schwerere Partikel werden dadurch besonders geschont.

In einer weiteren Ausgestaltung kann die Vorrichtung eine Vielzahl, wie z.B. 2 bis 5, seriell angeordneter Falldämpferelemente umfassen, die mit elastischen Verbindungsmitteln, beispielsweise Spiralfederelementen, verbunden sind, und wobei gleichzeitig ein flexibler, biegsamer Träger, wie. z.B. ein Stahlseil, mittig durch die Federelemente und die Falldämpferelemente durchgeführt ist. Dabei ist das proximale, d.h. das zuletzt in das Rohr eingeführte, Falldämpferelement oder ein nicht als Falldämpferelement ausgebildeter Anker am flexiblen Träger befestigt, während die sich darunter anschließenden Falldämpfer- und Federelemente parallel zum Träger federnd bewegbar sind. Der zentrale flexible Träger verleiht der Vorrichtung dabei zusätzliche Stabilität.

In einer weiteren bevorzugten Ausführungsform der Erfindung ist die Befüllvorrichtung, wie insbesondere deren Träger mit einer optischen oder akustischen Überwachungsvorrichtung kombiniert ist. Diese ermöglicht eine Überwachung und erforderlichenfalls Dokumentierung des Befüllvorgangs sowie die Einstellung eines im Wesentlichen konstanten Mindestabstands von unterem, distalem Falldämpferelement zur Schüttung und damit die Einstellung einer gewünschten freien Fallhöhe der Füllgutpartikel.

Geeignete optische Überwachungsvorrichtungen sind am distalen Ende, das in das zu befüllende Rohr eingeführt wird, mit einer optischen Linse oder einem Detektor und gegebenenfalls einer Lichtquelle oder Schallquelle ausgestattet und am proximalen Ende mit einem Monitor oder sonstigem Kontrollgerät verbunden. Außerdem können geeignete Überwachungsvorrichtungen Mittel zum Aufzeichnen des Verlaufs der Rohrbefüllung umfassen. Derartige Überwachungsvorrichtungen umfassen außerdem einen flexiblen Signalleiter, wie z.B. Lichtleiter, der auch gleichzeitig als Träger für Falldämpferelemente fungieren kann. Der Leiter kann insbesondere auch anstelle des zentralen Trägers in der oben beschriebenen Ausgestaltung der erfindungsgemäßen Vorrichtung mit einer Vielzahl von Falldämpfer- und Federelementen verwendet werden, die daran lösbar befestigt sind.

Die Linse oder der Detektor der Überwachungsvorrichtung ist vorzugsweise unterhalb des untersten Falldämpferelements der Vorrichtung angeordnet, so dass eine ungehinderte Überwachung und gegebenenfalls Aufzeichnung des Füllvorgangs ermöglicht wird.

Geeignete optischen Überwachungsvorrichtungen aus Kamera, Lichtleiter (Haspel) und Aufzeichnungseinheit, wie sie z.B. zur Kontrolle vor Rohrleitungen eingesetzt werden, sind auf dem Markt erhältlich und können für die Bedürfnisse der vorliegenden Erfindung mit einem oder mehreren wie oben beschrieben Falldämpferelementen ausgerüstet werden. Beispielsweise werden geeignete Überwachungsvorrichtungen von der Firma Kummert Inspektionssysteme e.K., Gerolzhofen, Deutschland in verschiedenen Ausführungen vertrieben (wie z.B. Kamera K-35, Durchmesser des Kamerakopfs 35 mm; Haspel H-S 30; Durchmesser 6 mm). Derartige Vorrichtungen umfassen als Kamera einen Farb-CCD Sensor und als Lichtquelle im Kamerakopf angeordnete LEDs. Der Lichtleiter wird von Kunststoff-ummantelten Glasfaserkabeln mit einem Außendurchmesser von etwa 5 bis 8 Millimetern gebildet, an welchen die erfindungsgemäßen Falldämpferelemente in der oben beschriebenen Weise befestigbar sind.

Weiterhin kann eine erfindungsgemäße Vorrichtung trichterförmige Einfüllhilfen umfassen. Diese können auf das zu befüllende Rohr aufgesetzt werden. Beispielsweise umfassen geeignete Einfüllhilfen einen Rohrstutzen dessen Außendurchmesser dem Innendurchmesser des zu befüllenden Rohres entspricht. Seitlich angebracht kann ein Einfülltrichter sein, in den das Füllgut eingefüllt wird und von dort über den Rohrstutzen in das zu befüllende Rohr gelangt. Zusätzlich kann im Boden des Trichters eine Förderhilfe, wie z.B. eine Förderschnecke oder ein Förderrad, vorgesehen sein, welche eine konstante Menge des Füllguts in das Rohr befördert.

Ein weiterer Gegenstand der Erfindung betrifft die Verwendung einer Befüllvorrichtung gemäß obiger Beschreibung zum Befüllen eines Rohrreaktors mit Katalysatorpartikeln.

Die erfindungsgemäße Vorrichtung ist für das Befüllen unterschiedlicher Reaktortypen geeignet. Beispielsweise können insbesondere Reformer genannt werden.

Die erfindungsgemäße Vorrichtung ist außerdem für das Befüllen von Rohrreaktoren mit unterschiedlichst ausgebildeten Katalysatorteilchen geeignet. So können Vollkatalysator-Partikel oder geträgerte Katalysatoren, sogenannte Schalenkatalysatoren, besonders schonend verarbeitet werden. Die Partikel können in verschiedenen geometrischen Formen, wie z.B. in Form von Kugeln, Ringen, Zylindern, Hohlzylindern, Würfeln oder Quadern, vorliegen. Typischerweise liegt das Partikelgewicht im Bereich von etwa 1 bis 10, insbesondere 2 bis 4 Gramm.

Insbesondere sind die erfindungsgemäßen Vorrichtungen zum Befüllen von Rohrreaktoren mit einem Innendurchmesser von mehr als 50 mm, wie z.B. 70 bis 300 mm geeignet.

Gegenstand der Erfindung ist weiterhin ein Verfahren zur Befüllung einer vorzugsweise vertikal angeordneten Röhre mit partikelförmigem Material, dadurch gekennzeichnet, dass man die Vorrichtung gemäß obiger Definition über das obere Ende des Rohres so weit einführt dass das unterste Falldämpferelement den Rohrboden gerade nicht berührt, und die Vorrichtung entgegen der Fallrichtung der Partikel während der Befüllung aus dem Rohr entfernt. Dabei kann die Vorrichtung kontinuierlich oder schrittweise aus dem Rohr entfernt werden.

Um das Einführen der Vorrichtung in das Rohr zu erleichtern, kann es gegebenenfalls zweckmäßig sein, am unteren Ende, d.h. unterhalb des zuerst eingeführten Falldämpferelements, ein Zuggewicht aus Stahl oder Hartgummi am Träger vorzusehen. Dieses kann beispielsweise zylinderförmig ausgebildet sein und ein Verhältnis von Durchmesser zu Länge von etwa 2:4 bis 1:10 aufweisen, wie z.B. eine Länge von 100 mm und einen Durchmesser von 20 bis 25 mm. Das Gewicht kann beispielsweise im Bereich von 50 bis 500 Gramm oder 100 bis 250 Gramm liegen.

Wird der Befüllvorhang z.B. optisch überwacht, so kann man diesen unterbrechen, wenn Bepackung des Rohres mit Füllgut ungleichmäßig erfolgt.

In einer weiteren Ausgestaltung des erfindungsgemäßen Verfahrens besteht die Möglichkeit eventuell anfallenden staubförmigen Abrieb der Katalysatorpartikel aus dem Rohr durch Einblasen von Luft zu entfernen. Dazu kann man gleichzeitig mit der Füllvorrichtung eine Druckluftleitung einführen, die auf das Partikelbett Luft bläst. Staubförmige Bestandteile werden dadurch aufgewirbelt und mit dem Luftstrom entgegen der Füllrichtung aus dem Rohr ausgetragen. Geeignete Vorrichtungen zum Einleiten von Luft und gegebenenfalls um Absaugen von Staub sind dem Fachmann an sich bekannt.

Ein letzter Gegenstand der Erfindung betrifft eine Füllvorrichtung mit optischer Überwachungsvorrichtung, umfassend einen optischen Lichtleiter, an dessen Eingang eine optische Sammellinse gegebenenfalls zusammen mit einer Lichtquelle ausgebildet ist, und dessen Ausgang mit einem Empfänger verbunden ist, wobei die Vorrichtung zusätzlich wenigstens ein Falldämpferelement gemäß obiger Definition trägt.

Die vorliegende Erfindung wird nunmehr unter Bezugnahme auf beiliegende, spezielle nichtlimitierende Ausführungsformen zeigende Figuren näher beschrieben:

### d) Beispielhafte Ausführungsformen

Figur 1 zeigt eine erfindungsgemäße Füllvorrichtung (1) während der Befüllung eines Rohres (6) mit Füllgutpartikeln (P), welche auf dem Rohrboden (61) aufgeschüttet werden. Insbesondere umfasst die Vorrichtung (1) drei erfindungsgemäße Falldämpferelemente (3), welche an einem Träger (2), wie einem biegsamen Stahlseil mit einem Durchmesser von 2 bis 8 mm, wie z.B. 3,5 bis 6 mm, befestigt sind. Jedes Falldämpferelement (3) trägt eine Vielzahl von irregulär angeordneten, gekrümmten Netzelementen (40), welche das Netzgebilde (4) ausbilden. Über einem jeden Falldämpferelement (3) ist ein hut- oder schirmförmiger Füllgutabweiser (10) am Träger (2) befestigt und so ausgebildet, dass er den Zentralbereich des von den Netzelementen (40) ausgebildeten Netzes (4) vor direktem Aufprall von Füllgutpartikeln (P) schützt. Weiterhin umfasst die Füllvorrichtung (1) eine in das obere, offenen Ende des Rohres (6) eingesetzte Einfüllhilfe (7), bestehend aus einem Rohrstutzen (70), einer als Anschlag oder Auflage dienenden, umlaufenden Krause bzw. einem Flansch (73) und einem oberhalb der Krause (73) mit dem Rohrstutzen (70) über eine Zuleitung (74) verbundene Trichter (71) mit eingesetzter schneckenförmiger Förderhilfe (72). In einer Abwandlung dieser Vorrichtung kann der Träger (2) durch einen hier ebenfalls beschriebenen Signalleiter, wie z.B. einem Lichtleiter (50) einer optischen Überwachungsvorrichtung ersetzt sein, an dem einzelne Falldämpferelemente, wie z.B. solche die zwei hierin beschriebene, miteinander verschraubbare Korpushälften (360,361) (vgl. z.B. Figur 8) umfassen, lösbar befestigt sind.

Figur 2 zeigt die Seitenansicht eines liegend dargestellten, erfindungsgemäßen Falldämpferelements (3). Das Falldämpferelement (3) umfasst zwei Ringschrauben (30, 30a) zur Befestigung des Falldämpferelements (3) am Träger (2). Die Ringschrauben umfassen einen Gewindehals (32) (in Figur 2 nicht dargestellt) mit einer umlaufenden, als Anschlag dienenden Krause (31). Der Korpus (33) des Falldämpferelements (3) umfasst drei Segmente, welche von zwei seitlichen über den Gewindehals (32) der Schrauben (30) bis zu deren Anschlag (31) geschobene Hülsen (34) und einer zentralen Kupplungshülse (35) mit Innengewinde gebildet werden. Die Hülsen (34) und die Kupplungshülse (35) weisen etwa gleiche Außendurchmesser auf. Der Gewindehals (32) der Schrauben (30, 30a) ist dabei länger als die Hülse (34), so dass das Außengewinde des Gewindehalses (32) in das Innengewinde der Kupplungshülse (35) eingreifen kann. Die Kupplungshülse (35) dient zur Verschraubung der beiden Ringschrauben (30). Zwischen Anschlag (31) und Hülse (34) sowie zwischen Hülse (34) und Kupplung (35) sind radial gekrümmte Fasern (400) des Netzgebildes (4) eingesetzt, welche nach radialer Ausrichtung durch Verschrauben der beiden Ringschrauben (30) mit der Kupplung (35) fixiert werden. Mehrere solcher Falldämpferelemente können unter Verwendung von Stahlseilen mit Hilfe herkömmlicher Seilklemmen seriell verknüpft werden. Über die Anschläge (31) der beiden Ringschrauben werden die einzelnen Elemente (34, 35) zusammengepresst. Die obere (in der Figur linke) Ringschraube (30a) trägt in den von den beiden Anschlägen (31,31a) ausgebildeten Zwischenraum einen erfindungsgemäßen schirmförmigen Füllgutabweiser (10) (nur in Umrissen dargestellt), der um die longitudinale Achse der Ringschraube (30a) bewegbar ist (drehbar, kippbar) und somit keine starre Barriere für die darauf aufprallenden Füllgutpartikel darstellt. Der Füllgutabweiser (10) ist in seiner maximalen radialen Abmessung breiter als der Korpus (33) in seiner radialen Abmessung.

In einer nicht dargestellten Abwandlung des Falldämpferelements (3) aus Figur 2 können die Hülsen (34) durch eine Vielzahl, wie z.B. 2 bis 5, mit den Ringschrauben verschraubbaren Muttern, wie z.B. handelsüblichen Sechskantmuttern mit Innengewinde, ersetzt sein. Je Ringschraube können so viele Muttern aufgeschraubt werden, dass ein sicheres Verschrauben mit der zentralen Kupplung (35) noch möglich ist. Zwischen zwei benachbarten Muttern sind auf diese Weise die radial gekrümmten Fasern fest verschraubbar.

Figur 3 zeigt in der Draufsicht ein erfindungsgemäßes Falldämpferelement (3) entsprechend Figur 2 mit radial angeordneten, in gleicher Richtung aber unterschiedlich stark gekrümmten Fasern (400) unterschiedlicher Länge, welche eine asymmetrisches offenes Netzgebilde (4) ausbilden, dessen maximaler radialer Durchmesser d dem Innendurchmesser dₗ des zu befüllenden Rohres (6) (als Kreis angedeutet) entspricht. Die Fasern (400) sind dabei am Korpus (33) des Falldämpferelements (3) radial verteilt, irregulär angeordnet. Die im Wesentlichen mittige Anordnung des in der Draufsicht kreisförmigen Füllgutabweisers (10) ist schematisch angedeutet. Der Füllgutabweiser (10) ist in seiner maximalen radialen Abmessung breiter als der Korpus (33) in seiner radialen Abmessung.

Figur 4 zeigt in der Draufsicht eine alternative Ausgestaltung eines Falldämpferelements (3) aus Figur 2 mit radial am Korpus (33) angeordneten, in verschiedenen Richtungen und unterschiedlich stark gekrümmten Fasern (400), welche eine asymmetrisches, offenes Netzgebilde (4) ausbilden. Die im Wesentlichen mittige Anordnung des in der Draufsicht kreisförmigen Füllgutabweisers (10) ist schematisch angedeutet. Der Füllgutabweiser (10) ist in seiner maximalen radialen Abmessung breiter als der Korpus (33) in seiner radialen Abmessung.

Figur 5a zeigt in der Draufsicht eine weitere alternative Ausgestaltung eines Falldämpferelements (3) aus Figur 2 mit radial am Korpus (33) angeordneten Schlaufen (402) unterschiedlicher Länge, welche eine asymmetrisches, geschlossenes Netzgebilde (4) ausbilden. Figur 5b zeigt in der Draufsicht eine weitere alternative Ausgestaltung eines Falldämpferelements (3) aus Figur 5a welches von einem einstückigen, elastischen Faden (404) gebildet wird, der schlaufenartige Segmente ausbildet, indem er abschnittsweise am Korpus (33), z.B. über von dem Faden ausgebildete Ösen, befestigt ist. Auch hier wird ein asymmetrisches, geschlossenes Netzgebilde (4) ausgebildet. Die im Wesentlichen mittige Anordnung des in der Draufsicht kreisförmigen Füllgutabweisers (10) ist jeweils schematisch angedeutet. Der Füllgutabweiser (10) ist in seiner maximalen radialen Abmessung breiter als der Korpus (33) in seiner radialen Abmessung.

Figur 6 zeigt verschiedene Ausgestaltungen erfindungsgemäßer Netzelemente (40), und zwar a) als radial gekrümmte Einzelfaser (400), b) als radial gekrümmte S-förmige Doppelfasern (401); c) als Schlaufe (402). Jedes dieser Netzelemente ist aus einem Stück geformt und bildet eine zentrale Öse (403) aus, welche der Befestigung am Falldämpferelement (3) dient. Vorzugsweise wird durch die Öse (403) der Gewindehals (32) der Ringschraube (30) (vgl. Figur 2) hindurchgeführt und in der oben beschriebenen Weise das Netzelement fixiert. Die Figuren 6 d), e) und f) zeigen Netzelemente, welche über Federgelenke (407) am Falldämpferelement befestigbar sind, und zwar d) eine Faser (405), e) eine Schlaufe (406) mit zwei endständigen Federgelenken und f) eine Zackenfaser (408).

Figur 7 zeigt in schematischer Darstellung eine weitere Ausgestaltung einer in ein Rohr (6) eingesetzte Füllvorrichtung (1a), umfassend neben der oben bereits beschriebenen Einfüllhilfe (7) einen als Träger dienenden, flexiblen Lichtleiter (50), außerhalb des Rohres (6) verbunden mit einem Monitor (53) und am gegenüberliegenden im Rohr (6) befindlichen Ende ausgestattet mit einer Lichtquelle (52) und einer Linse (51). Die Vorrichtung umfasst drei Falldämpferelemente (3a) welche durch Spiralfedern (8) miteinander federnd verbunden sind. Über einem jeden Falldämpferelement (3a) ist ein hut- oder schirmförmiger Füllgutabweiser (10) so ausgebildet, dass er den Zentralbereich des von den Netzelementen (40) ausgebildeten Netzes (4) vor direktem Aufprall von Füllgutpartikeln (P) schützt. Der Füllgutabweiser (10) umschließt dabei das obere Ende des Falldämpferelements (3a). Beispielsweise kann der Füllgutabweiser (10) mit dem oberen Ende des Falldämpferelements (3a) formschlüssig verbunden sein, oder in einer dort ausgebildeten (nicht dargestellten) umlaufenden Ausnehmung, bewegbar (drehbar und/oder kippbar) eingesetzt sein. Das oberste der Falldämpferelemente (3a) ist mit Hilfe einer weiteren Spiralfeder (8) an einem an Lichtleiter angebrachten und dort fixierten Anker (9) verbunden. Die Falldämpferelemente (3a) sind so ausgebildet, dass sie eine zentrale Bohrung aufweisen deren Innendurchmesser größer ist als der Außendurchmesser des Lichtleiters (50). Damit können sich die Falldämpferelemente (3a) (einschließlich des zugeordneten Füllgutabweisers (10)) parallel zum Lichtleiter (50) während des Füllvorgangs innerhalb des Rohres (6) federnd auf und ab bewegen.

Figur 8 zeigt eine weitere Ausgestaltung erfindungsgemäßer Falldämpferelemente. Die Netzelemente, hier Schlaufen (406) mit Federgelenken (407), werden von einem zweiteiligen hülsenförmigen metallischen Korpus, bestehend aus zwei miteinander verschraubbaren Korpushälften (360,361) getragen. Die Federgelenke sind dabei in seitliche, radial über den Umfang der Korpushälften verteilte Vertiefungen (362) eingesetzt und dort z.B. verklebt. Der Innenradius des hülsenförmigen Korpus ist an den Durchmesser des Trägers, hier des Lichtleiters (50), wie z.B. eines Lichtleiters einer in Figur 7 dargestellten optischen Überwachungsvorrichtung, angepasst, so dass bei Verschrauben der beiden Korpushälften, der Korpus am Lichtleiter (50) formschlüssig fixiert wird. Figur 8a) zeigt die perspektivische Ansicht der Anordnung vor dem Verschrauben der beiden Korpushälften (360, 361) mit Hilfe von Schrauben (363). Diese sitzen in Bohrungen (365) der einen Korpushälfte (361) und werden mit den Gewindebohrungen (364) der zweiten Korpushälfte (360) verschraubt. Figur 8b) zeigt einen Querschnitt durch den verschraubten Korpus. Aus Gründen der Übersichtlichkeit ist nur ein Netzelement (406) dargestellt. Zur Ausbildung eines erfindungsgemäßen Netzgebildes sind weitere Netzelemente (406) in dafür vorgesehene radial und longitudinal über die Korpushälften verteilte Vertiefungen (362) einzusetzen, vorzugsweise in der Art, dass sich einzelne Netzelemente (406) in der Projektion (Draufsicht) überschneiden. Anstelle der Schlaufen (406) können ebenso andere Netzelemente, wie z.B. Fasern (405) oder Zackenfasern (406), verwendet werden. Ein erfindungsgemäßer Füllgutabweiser (10) (hier nicht gezeigt) kann nach dieser Ausführungsform am Lichtleiter (50) ebenfalls oberhalb eines jeden Falldämpferelements angeordnet werden, indem man diesen zwischen zwei in Reihe am Lichtleiter (50) formschlüssig befestigten Korpus-Elementen platziert, die entsprechend Korpus (330) aus zwei Hälften ausgebildet sind, jedoch keine falldämpfenden Schlaufen (406) tragen.

Figur 9 zeigt weitere Ausgestaltungen erfindungsgemäßer Falldämpferelemente. Ein einstückiger, metallischer Korpus (330) ist jeweils an seinem oberen und unteren Ende mit einem Schraubgewinde (331) versehen. Über diese Schraubgewinde (331) ist er mit dem (nicht dargestellten) Träger (2), wie z.B. einem Stahlseil, verbindbar. Über den gesamten Umfang des mittleren Abschnittes des Korpus (330) sind mehrere Vertiefungen (332) vorgesehen, welche so ausgebildet sind, dass darin die z. B. aus Stahldraht gefertigten Netzelemente fixierbar sind. Insbesondere sind hier Vertiefungen (332) vorgesehen, welche die Federgelenke (407) von verschiedenen Falldämpferelementen aufnehmen können. Nach dem Einsetzen der Federgelenke (407) ragen diese noch soweit aus den Vertiefungen (332), dass eine Federwirkung bei Belastung, d.h. Aufprall von Partikeln während der Befüllung, gewährleistet ist. Figur 9a) zeigt ein aus vier radial über den Umfang des Korpus (330) verteilten Fasern (405) gebildetes dreidimensionales Netz des dargestellten Falldämpferelements, wobei jedes distale Faserende mit Hilfe einer Verbindung (409), wie z.B. einer aufgesteckten und zusammengeklemmten Metallhülse, mit einer benachbarten Faser (405) in deren Mittelabschnitt verbunden ist. Das Netzgebilde weist in der Draufsicht somit einen in etwa kreisförmigen Umfang auf. Figur 9b) zeigt ein aus vier Schlaufen (406) gebildetes dreidimensionales Netz des dargestellten Falldämpferelements, wobei beide Enden jeder der Schlaufen als Federgelenke (407) ausgebildet sind und in einer von insgesamt acht radial und longitudinal am Korpus (330) verteilten Vertiefungen (332) eingesetzt sind. In der Draufsicht können sich einzelne Schlaufen (406) überschneiden. Figur 9c) zeigt ein aus vier Zackenfasern (408) gebildetes dreidimensionales Netz des dargestellten Falldämpferelements, wobei jede der Fasern über ein Federgelenk (407) in einer von mehreren radial und longitudinal am Korpus (330) verteilten Vertiefungen (332) eingesetzt ist. Die Zackenfasern zweier benachbarter Falldämpferelemente können sich dabei in der Draufsicht überschneiden. Die in Figur 9 dargestellten Falldämpferelemente können in einer weiteren erfindungsgemäßen Abwandlung in analoger Weise unter Verwendung eines zweiteiligen, z.B. verschraubbaren Korpus analog Figur 8, bereitgestellt werden.

Figur 10a zeigt ein aus vier Schlaufen (406) gebildetes dreidimensionales Netz des dargestellten Falldämpferelements, wobei beide Enden jeder der, z.B. aus Stahldraht gefertigten Schlaufen als Federgelenke (406) ausgebildet sind und in einer von insgesamt acht radial und longitudinal am Korpus (330) verteilten Vertiefungen (332) eingesetzt sind. An den beiden Enden des Korpus (330) sind Schraubgewinde (331) ausgebildet, welche zur Verbindung mit dem Trägerseil (20) dienen. An den Seilenden des Trägerseils (20) sind zu diesem Zweck Schraubkappen (333) befestigt. Schraubkappe (333) und Korpus (330) besitzen in etwa gleiche radiale Abmessungen. Vor dem Zusammenbau der erfindungsgemäßen Vorrichtung wird oberhalb des jeweiligen Falldämpferelementes der schirmförmige, z.B. aus Stahlblech geformter kegelförmiger, Füllgutabweiser (10) mit über die Bohrung (12), welche mittig in dessen schirmförmiger Seiten- oder Mantelfläche (11) (konkav gekrümmte Mantelfäche) ausgebildet ist, auf den Korpus (330) aufgesetzt und das durch die Bohrung (12) des Füllgutabweisers (10) ragende Ende des Schraubgewindes (331) wird mit der Schraubkappe (333) verschraubt. Der Füllgutabweiser (10) ist in seiner maximalen radialen Abmessung breiter als der Korpus (330) in seiner radialen Abmessung.

Figur 10b zeigt einen Querschnitt eines gemäß Expositionszeichnung nach Figur 10a mit einem Träger (20) verbundenen Falldämpferelementes gemäß Figur 9b. Die kegelförmig verdickten Seilenden (21) sitzen formschlüssig in der Schraubkappe (333). Im verschraubten Zustand berühren sich Schraubkappe (333) und Korpus (330) nicht sondern bilden im Bereich des freiliegenden Gewindeabschnitts des Schraubgewindes (331) einen Sitz (338) für den konkav (nach oben entgegen der Fallrichtung)) gekrümmten Füllgutabweiser (10) der die longitudinale Beweglichkeit des darin eingesetzten Füllgutabweisers entlang des Schraubgewindes 331 begrenzt. Durch geeignete Wahl von Höhe des Sitzes (338) und Wandstärke des Füllgutabweisers (10) sowie des Durchmessers der Öffnung (12) im Füllgutabweiser (10) lässt sich dessen Spiel in gewünschter Weise einstellen. Hier ist er so bemessen, dass der Füllgutabweiser (10) im eingebauten Endzustand um die Längsachse der Vorrichtung (und um das Schraubgewinde (331)) drehbar sowie seitlich kippbar oder neigbar bleibt.

Figur 10c zeigt einen Querschnitt durch eine erfindungsgemäße Schraubkappe (333), wie sie in den Figuren 10a oder 10b dargestellt ist. In der unteren Hälfte ist das zum Schraubgewinde (331) korrespondierende Innengewinde (337) ausgebildet. Die Ausnehmung (334) dient zur formschlüssigen Verschraubung mit dem Schraubgewinde (331) des Falldämpferelementes. Die Ausnehmung (334) setzt sich nach oben in einer Verjüngung (335) fort. Diese dient einerseits als Anschlag für das Schraubgewinde (331) sowie als Aufnahme für das formschlüssig ausgebildete kegelförmige Seilende (21) des Trägerseils (20), welches durch die obere Bohrung (336) der Schraubkappe (333) geführt wird. Die Längen des Schraubgewindes (331) sowie des Innengewindes (337) sind so aufeinander abgestimmt, dass bei vollständiger Verschraubung von Korpus (330) mit Schraubkappe (333) ein Abstand zwischen den beiden Enden von Korpus (330) und Schraubkappe (333) bleibt, der dann als Sitz (338) für den Füllgutabweiser (10) dient.

Figur 11 zeigt verschiedene Ausgestaltungen erfindungsgemäßer schirmförmiger Füllgutabweiser (10). Links dargestellt ist jeweils eine perspektivische, räumliche Ansicht, rechts daneben der Querschnitt durch den jeweiligen Füllgutabweiser. Figur 11a zeigt einen kegelförmig ausgebildeten Schirm (10a), Figur 11b zeigt einen tulpenförmig ausgebildeten Schirm (10b), Figur 11c zeigt einen halbkugelförmig ausgebildeten Schirm (10c) und Figur 11d zeigt einen kegelförmigen Schirm (10d) mit gekrümmter Seitenfläche. In den zugeordneten Querschnitten ist die jeweilige maximale Schirmbreite (dₘₐₓ) ebenso wie für (10a) exemplarisch die Schirmhöhe h (oder hₘₐₓ) angegeben.

Figur 12 zeigt zwei weitere Ausgestaltungen erfindungsgemäß brauchbarer Füllgutabweiser (10e und 10f). Figur 12a zeigt dabei einen kegelförmigen Schirm (10e), welcher eine mehrfach geschlitzte Seitenfläche (11e) aufweist. Figur 12b zeigt dagegen einen mehrstückigen, aus radial in Befüllrichtung nach unten weisenden, geraden Borsten gebildeten Füllgutabweiser (10f). Die Borsten sind an ihrem oberen Ende mittels eines Metallringes zusammengefasst.

Weitere Abwandlungen der hier beschriebenen konkreten Ausführungsformen kann der Fachmann unter Befolgung der erfindungsgemäßen technischen Lehre bereitstellen.

Auf die Offenbarung der hierin zitierten Druckschriften wird ausdrücklich Bezug genommen.

## Patentansprüche

1. Vorrichtung (1) zum Befüllen eines Rohres mit partikelförmigem Füllgut, umfassend wenigstens ein an einem Träger (2) befestigtes und zusammen mit dem Träger (2) in das zu befüllende Rohr einführbares Falldämpferelement (3),
**dadurch gekennzeichnet, dass**
oberhalb des wenigstens einen Falldämpferelements (3) ein radial den Träger (2) umschießender Füllgutabweiser (10) angeordnet ist, dessen Außendurchmesser geringer ist als der Innendurchmesser des zu befüllenden Rohres, wobei der Füllgutabweiser (10) schirmförmig ausgebildet ist und den Zentralbereich des wenigstens einen Falldämpferelements (3) während eines Befüllvorganges vor direktem Aufprall von Füllgutpartikeln schützt.

2. Vorrichtung nach Anspruch 1, wobei das wenigstens eine Falldämpferelement (3) ein für die Füllgutpartikel durchlässiges Netzgebilde (4) trägt, wobei das Netzgebilde (4) eine Vielzahl elastischer Netzelemente (40) umfasst und oberhalb des Netzgebildes (4),der Füllgutabweiser (10) angeordnet ist.

3. Vorrichtung nach einem der vorherigen Ansprüche, wobei das Netzgebilde einen mittigen, vorzugsweise zylindrischen, Korpus (33, 330) umfasst, der die Netzelemente (400, 401, 402, 404, 405, 406, 408) trägt.

4. Vorrichtung nach einem der vorherigen Ansprüche, wobei der Füllgutabweiser (10) am Träger (2) bewegbar befestigt ist.

5. Vorrichtung nach einem der vorherigen Ansprüche, wobei der Füllgutabweiser (10) eine in Fallrichtung geneigte Seitenfläche (11) aufweist.

6. Vorrichtung nach einem der vorherigen Ansprüche, wobei der Füllgutabweiser (10) einstückig oder mehrstückig ausgebildet ist.

7. Vorrichtung nach Anspruch 6, wobei der Füllgutabweiser (10) einstückig, insbesondere kegelförmig, tulpenförmig oder halbkugelförmig, oder aber kugelförmig ausgebildet ist.

8. Vorrichtung nach einem der vorherigen Ansprüche, wobei der Füllgutabweiser (10) in der vertikalen Projektion einen maximalen Durchmesser d_{max.} aufweist, der etwa 5 bis 50% des Rohrinnendurchmessers dₗ des zu befüllenden Rohres entspricht.

9. Vorrichtung nach einem der vorherigen Ansprüche, wobei der Füllgutabweiser (10) ) so ausgebildet ist, dass das Durchmesserverhältnis (dₘₐₓ (Falldämpferelement) : dₘₐₓ (Füllgutabweiser)) im Bereich von 1 : 0,9 bis etwa 1 : 0,1, vorzugsweise 1: 0,6 bis 1: 0,15 oder besonders bevorzugt 1:0,4 bis 1 : 0,2 liegt.

10. Vorrichtung nach einem der vorherigen Ansprüche, wobei der Füllgutabweiser (10) mittig eine Höhe hₘₐₓ aufweist, die in etwa 2 bis 60% des Rohrinnendurchmessers dₗ des zu befüllenden Rohrs entspricht.

11. Vorrichtung nach einem der vorherigen Ansprüche, wobei der Füllgutabweiser (10) so ausgebildet ist, dass er ein Verhältnis von dₘₐₓ: hₘₐₓ im Bereich von 1:0.1 bis 1:5 aufweist.

12. Vorrichtung nach einem der Ansprüche 3 bis 11, wobei der Füllgutabweiser (10) so ausgebildet ist, dass sein radialer Durchmesser dₘₐₓ größer ist als der radiale Durchmesser des mittigen, vorzugsweise zylindrischen, Korpus (33, 330).

13. Verwendung einer Vorrichtung nach einem der vorhergehenden Ansprüche zum Befüllen eines Rohrreaktors mit Katalysatorpartikeln.

14. Verfahren zur Befüllung einer vertikal angeordneten Röhre mit partikelförmigem Material, **dadurch gekennzeichnet, dass** man die Vorrichtung (1) nach einem der Ansprüche 1 bis 12 über das obere Ende der Röhre so weit einführt dass das unterste Falldämpferelement (3) den Röhrenboden nicht berührt, und die Vorrichtung entgegen der Fallrichtung der Partikel während der Befüllung aus der Röhre entfernt.

15. Verfahren nach Anspruch 14, wobei ein Rohrreaktor mit Katalysatorpartikeln befüllt wird.
